# EUROPEAN PATENT APPLICATION

(11) **EP 2 200 031 A2**
(43) Date of publication of application: **23.06.2010**
(21) Application number: 10158490.2
(22) Date of filing: 22.07.2004
(51) Int. Cl.: G11B 20/00, G11B 20/10, G06F 21/00

(54) **Recording and reproducing apparatus, file accessing method, AV data managing method, and server**

(30) Priority: 03.10.2003 JP 2003346217; 28.11.2003 JP 2003398358
(62) Divisional of application: 04770865.6
(71) Applicant: Sharp Kabushiki Kaisha, Osaka-shi, Osaka 545-8522 (JP)
(72) Inventor: Kiyama, Jiro, Chiba 274-0825 (JP); Kizuki, Hideaki, Chiba, Chiba 263-0044 (JP); Ohizumi, Katsushi, Chiba, Chiba 266-0005 (JP)
(74) Representative: Treeby, Philip David William

(57) **Abstract**

A recording and reproducing apparatus (10) comprises an external device I/F (12) for connecting an external recording medium (16) where contents including AV data or an application program are recorded, a recorder (20) for recording a content read from the external recording medium (16), and a processing unit (11) for reproducing or executing the recorded content. The processing unit (11) imposes a different access limitation to an any content reproducable or executable by the recording and reproducing apparatus (10) depending on the install processing, load processing and content execution processing, and constrains the access to the content in the content execution processing depending on the reliability of the content.

## Description

### TECHNICAL FIELD

The present invention relates to a recording and reproducing apparatus, file accessing method, AV data managing method, and server and, more specifically, to a method of recording, reproducing, and file access of AV data constituted by video data, audio data, etc. and a managing method of the AV data with the use of management information.

### BACKGROUND OF THE INVENTION

Along with popularization of DVD players, DVD recorders, etc., hybrid DVD recorders having built-in HDD are beginning to appear in the market. On the other hand, along with popularization of, for example, Java (registered trademark) language, etc., application execution environments are disseminated among terminals such as cellular phones. However, when any application can be executed, it is risky to permit access to all the information. Therefore, certain applications (e.g., i-appli (registered trademark), etc.) permit only credible applications to access to various pieces of information such as a telephone directory retained in a cellular phone.

Generally, since an application downloaded into a terminal may operate improperly, the operation of the application is strictly restrained and the application cannot use local resources.
In response, for example, patent document 1 discloses an arrangement that uses application authentication information retained in a tampering-resistance area of an authentication module to perform authentication of an application downloaded into a terminal to check where the application comes from and whether the application is altered or not and to permit only the authenticated application to use local resources.

Currently, a disk-shape recording medium such as DVD is popularized recording means of AV data such as video, audio, subtitles, etc. One reason is that the recording medium can perform random access. A feature of the random access is that it takes very short time to move to any data recording position to start reading data. For example, by preparing management information correlated with reproduction clock times on a reproduction time axis of AV data and with recording positions of the data, reproduction can be started from a desired reproduction clock time of a user on the reproduction time axis.

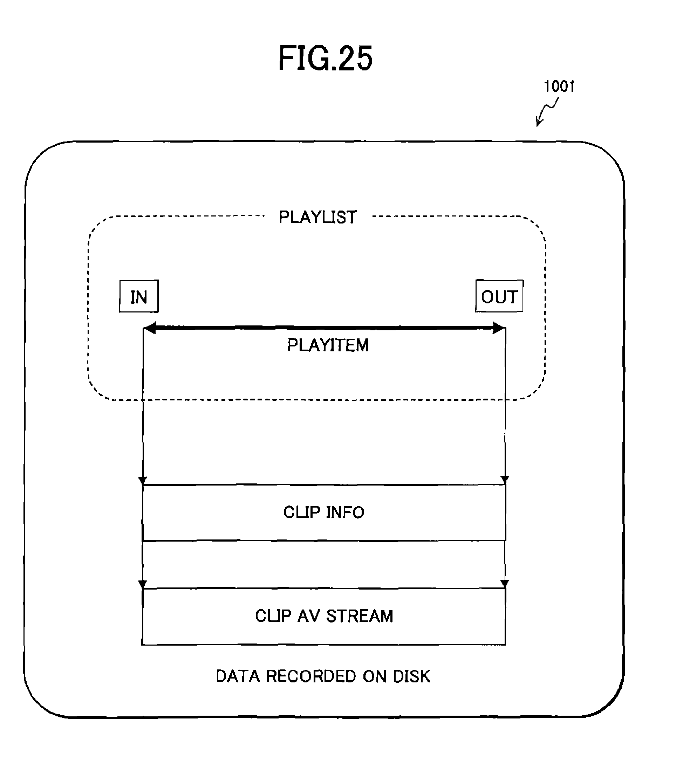

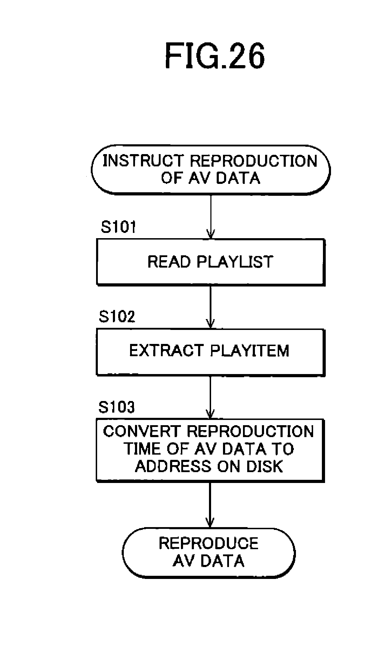

Description will be made of a conventional disk reproducing method based on Figs. 25 and 26 below.
Fig. 25 is a diagram showing a configuration example of data recorded on a conventional disk-shape recording medium; in the figure, 1001 is a disk-shape recording medium; and the disk-shape recording medium 1001 records a Clip AV Stream, Clip Info, Playitem, and Playlist. The Clip AV Stream records multiplexed AV data such as video, audio, etc. The multiplexed AV data includes video as well as pluralities of audio and subtitles that can be selected and reproduced. The Clip Info records information that correlates the AV data recording positions on the disk-shape recording medium 1001 with the reproduction clock times on the reproduction time axis of the AV data. The Playtime is information for managing a section where the AV data exists and has a name of a file recording the Clip Info, and a reproduction start clock time (In point) and a reproduction end clock time (Out point) of the Clip AV Stream on a reproduction time axis. The Playlist is management information constituted by one or more Playitems, which records the Playitems in the order of reproduction.

Fig. 26 is a flowchart for describing a reproducing method when reproducing the AV data managed by the Playlist shown in Fig. 25 from the beginning. A user instructs a recording and reproducing apparatus to read the data on the disk-shape recording medium 1001 and the instructed recording and reproducing apparatus reads the Playlist (step S101). The Playitem is extracted from the Playlist (step S102). By referring to the Clip Info managed by the Playitem, the reproduction time on the AV data reproduction time axis managed by the Playitem is converted to an address of the disk-shape recording medium 1001 recording the Clip AV Stream (step S103). Finally, reproduction is performed for the Clip AV Stream within a specified recording section. The reproducing method of the disk-shape recording medium 1001 is as described above.

The playlist can reproduce and manage two AV data concurrently and each of the AV data is managed in the Playitem sequence described above. The Playitems are referred to as Mainpath and Subpath, and the Subpath is mainly used for after-recording in a recording medium. The after-recording is to record and reproduce audio different from the audio corresponding to the reproduced video at the same time.

The Playitem of the Subpath has a name of a file recording the Clip Info, and a reproduction start clock time (In point) and a reproduction end clock time (Out point) of the Clip AV Stream on a reproduction time axis as well as the following two pieces of information for reproducing concurrently with the AV data managed by the Playitem of the Mainpath. One is information that identifies the Playitem of the Mainpath managing the AV data reproduced concurrently with the AV data managed by the Playitem of the Subpath. The other is reproduction clock time information that specifies a start of reproduction of the AV data managed by the Playitem of the Subpath in the reproduction time of the Mainpath. When reproducing the AV data managed by the Playitem of the Subpath, these pieces of information can identify the Playitem of the Mainpath of the AV data concurrently reproduced and start the reproduction of the AV data managed by the Playitem of the Subpath at the specified clock time of the AV data managed by the identified Playitem.

As described above, by using the Playitem of the Subpath, other AV data not included in the multiplexing can be combined with the multiplexed (original) AV data and can be reproduced concurrently. It is conceivable that this may be used for downloading AV data relevant to the content of the original AV data for concurrent reproduction. The downloading as used herein means to copy the data that a user wants to use from a server, etc. to a user terminal.

For example, patent document 2 discloses a method of easily checking information recorded on the disk to search desired information. In this method, information about all the information recorded on the disk is described in DVRVolume(); the information recorded on the disk can be checked with this description; information for reproducing the information recorded on the disk is described in Table Of Playlist () ; and the desired information can be easily searched with this description.
Patent Document 1: Japanese Laid-Open Patent Publication No. 2003-223235
Patent Document 2: Japanese Laid-Open Patent Publication No. 2002-157859

### DISCLOSURE OF THE INVENTION

### PROBLEMS TO BE SOLVED BY THE INVENTION

When a local storage is introduced in a terminal apparatus capable of executing an application and any application is executed in the local storage, since the application may copy or alter content despite the intention of the creator of the content, measures are needed for this situation. When application can be obtained from a plurality of routes, a malicious application with low reliability may be executed. Therefore, access to various pieces of information must be constrained depending on the reliability of the application.

Considering that a plurality of AV data is reproduced concurrently, the original AV data is not necessarily combined with one type of other AV data. For example, assuming that the original AV data is a U.S. movie, it is conceivable that other AV data combined for reproduction may be a plurality of subtitle data such as Japanese subtitle data and Dutch subtitle data. However, in the aforementioned method, since one Playlist can manage one Subpath only, many Playlits must be managed. This applies to the patent document 2 as well.

When the medium recording the original data is a read-only medium (e.g., DVD-ROM), if downloaded AV data is wanted to be recorded on a recording medium different from the recording medium and to be combined for reproduction, this is not achieved in the aforementioned method.

The present invention was conceived in consideration of the current condition described above and, by accessing to an external recording medium or a server that record content including AV data or application programs/data to records the content into local storage and by adding access constraint to any content recorded in the external recording medium or local storage in a recording and reproducing apparatus that reproduces or executes the recorded content, unauthorized copying or alteration due to the content can be prevented.

More specifically, by automating installation process and load process of the content to be installed and by calling a common function (installation or load) with the content in execution when such processes are performed, only allowed content to be installed is installed/loaded to prevent the unauthorized copying and, by constraining access of the content in execution, the alteration can be prevented.

By determining the reliability of the content and by applying access constraint to data read process and writing process at the time of the content execution different from the installation process and the load process depending on the reliability, unauthorized copying and alteration can be prevented.

The present invention was conceived with objects that:
when reproducing multiplexed AV data (hereinafter, "original AV data"), associated management information of a plurality of associated AV data not included in the original AV data can be added to the management information of the original AV data; the original AV data and the associated AV data can be combined and reproduced concurrently using the management information with the associated management information added; and if a recording medium recording the original AV data is different from a recording medium recording the plurality of the associated AV data, the original AV data and the associated AV data can be combined and reproduced concurrently.

### MEANS FOR SOLVING THE PROBLEMS

A first technical means is a recording and reproducing apparatus comprising a reading means that reads content including AV data or application programs/data; a recording means that records the read content; and a processing means that reproduces or executes the recorded content, wherein the processing means adds different access constraints to any content that can be reproduced or executed by the recording and reproducing apparatus depending on the process of the content.

A second technical means is the recording and reproducing apparatus of the first technical means, comprising an external interface to connect an external recording medium recording the content or to connect a server recording the content via network, wherein the processing means has an installation processing means that installs the content recorded in the external recording medium or the server connected with the external interface into a certain area of the recording means.

A third technical means is the recording and reproducing apparatus of the second technical means, wherein the installation processing means permits only the content allowed to be installed in the external recording medium or the server connected with the external interface to be installed into the certain area of the recording means.

A fourth technical means is the recording and reproducing apparatus of the second technical means, wherein the processing means instructs the installation processing means to install based on an installation instruction from the content reproduced or executed by the recording and reproducing apparatus and wherein the writing process to the certain area cannot be executed by other than the installation processing means.

A fifth technical means is the recording and reproducing apparatus of any one of the second to fourth technical means, wherein when the recording and reproducing apparatus reproduces or executes any content, the processing means makes the content unable to access other or all contents recorded in the external recording medium.

A sixth technical means is the recording and reproducing apparatus of any one of the second to fourth technical means, wherein when the recording and reproducing apparatus reproduces or executes any content, the processing means makes the content unable to access other or all contents installed in the recording means.

A seventh technical means is the recording and reproducing apparatus of any one of the second to fourth technical means, comprising a memory that is an execution area of the content, wherein the processing means has a load processing means that loads the executable content recorded in the recording means, the external recording medium, or the server into the memory.

An eighth technical means is the recording and reproducing apparatus of the seventh technical means, wherein the processing means instructs the load processing means to load based on a load instruction from the content reproduced or executed by the recording and reproducing apparatus and wherein the load process cannot be executed by other than the load processing means.

A ninth technical means is the recording and reproducing apparatus of the seventh or eighth technical means, wherein when the recording and reproducing apparatus reproduces or executes any content, the processing means makes the content unable to access other or all contents loaded in the memory.

A tenth technical means is the recording and reproducing apparatus of the seventh or eighth technical means, wherein the recording means has programs and data necessary for reproducing or executing the content that are regarded as one package and recorded on a package by package basis, wherein the load processing means loads at least all or some of the programs constituting an any package recorded in the recording means into the memory, and wherein when reproducing or executing all or some of the programs constituting the package that are loaded into the memory, the processing means makes the reproduced or executed programs unable to access packages other than the package including the programs.

An eleventh technical means is the recording and reproducing apparatus of the seventh or eighth technical means, wherein when the recording and reproducing apparatus reproduces or executes any content, the processing means completely prohibits the reproduced or executed content from accessing the recording means, the external recording medium, the server, and the memory.

A twelfth technical means is the recording and reproducing apparatus of any one of the first to eleventh technical means, wherein when the recording and reproducing apparatus reproduces or executes any content, the processing means constrains the access of the content depending on the reliability of the content.

A thirteenth technical means is the recording and reproducing apparatus of the twelfth technical means, wherein the reliability of the content is set based on any one or more of a description language of the program, a recording medium that is a read source of the content read by the reading means, and a network address that is a read source of the content read by the reading means.

A fourteenth technical means is a file accessing method for accessing content configuration files with the use of a recording and reproducing apparatus comprising a reading means that reads content including AV data or application programs/data, a recording means that records the read content, and a processing means that reproduces or executes the recorded content, wherein different access constraints are added to any content that can be reproduced or executed by the recording and reproducing apparatus depending on the process of the content.

A fifteenth technical means is the file accessing method of the fourteenth technical means, wherein the content recorded in the external recording medium or the server is read and wherein the read content is installed into a certain area of the recording means.

A sixteenth technical means is the file accessing method of the fifteenth technical means, wherein only the content allowed to be installed in the external recording medium or the server is allowed to be installed into the certain area of the recording means.

A seventeenth technical means is the file accessing method of the fifteenth technical means, wherein an installation processing means provided in the processing means is instructed to install based on an installation instruction from the content reproduced or executed by the recording and reproducing apparatus and wherein the writing process to the certain area of the recording means cannot be executed by other than the installation processing means.

An eighteenth technical means is the file accessing method of any one of the fifteenth to seventeenth technical means, wherein when the recording and reproducing apparatus reproduces or executes any content, the content is made unable to access other or all contents recorded in the external recording medium.

A nineteenth technical means is the f le accessing method of any one of the fifteenth to seventeenth technical means, wherein when the recording and reproducing apparatus reproduces or executes any content, the content is made unable to access other or all contents installed in the recording means.

A twentieth technical means is the file accessing method of any one of the fifteenth to seventeenth technical means, wherein the executable content recorded in the recording means, the external recording medium, or the server is loaded into a memory provided in the recording and reproducing apparatus.

A twenty-first technical means is the file accessing method of the twentieth technical means, wherein a load processing means provided in the processing means is instructed to load based on a load instruction from the content reproduced or executed by the recording and reproducing apparatus and wherein the load process cannot be executed by other than the load processing means.

A twenty-second technical means is the file accessing method of the twentieth or twenty-first technical means, wherein when the recording and reproducing apparatus reproduces or executes any content, the content is made unable to access other or all contents loaded in the memory.

A twenty-third technical means is the file accessing method of the twentieth or twenty-first technical means, wherein the recording means has programs and data necessary for reproducing or executing the content that are regarded as one package and recorded on a package-by-package basis, wherein at least all or some of the programs constituting an any package recorded in the recording means are loaded into the memory, and wherein when reproducing or executing all or some of the loaded programs constituting the package, the reproduced or executed programs are made unable to access packages other than the package including the programs.

A twenty-fourth technical means is the file accessing method of the twentieth or twenty-first technical means, wherein when the recording and reproducing apparatus reproduces or executes any content, the content is completely prohibited from accessing the recording means, the external recording medium, the server, and the memory.

A twenty-fifth technical means is the file accessing method of any one of the fourteenth to twenty-fourth technical means, wherein when the recording and reproducing apparatus reproduces or executes any content, the access of the content is constrained depending on the reliability of the content.

A twenty-sixth technical means is the file accessingmethod of the twenty-fifth technical means, wherein the reliability of the content is set based on any one or more of a description language of the program, a recording medium that is a read source of the content read by the reading means, and a network address that is a read source of the content read by the reading means.

A twenty-seventh technical means is an AV data managing method for managing AV data reproduction process with the use of management information of the AV data, the method comprising an associated AV data/management information acquiring step of acquiring a plurality of associated AV data associated with AV data recorded in a recording medium as well as management information of the AV data that has associated management information added for managing the reproduction process of the associated AV data; a recording step of recording the obtained plurality of the associated AV data and the management information of the AV data into a certain recording area; and a reproduction controlling step of concurrently reproducing and controlling the AV data recorded in the recording medium and the associated AV data recorded in the recording area in accordance with the recorded management information.

A twenty-eighth technical means is the AV data managing method of the twenty-seventh technical means, wherein as a result of retrieving the AV data management information that can be obtained at the associated AV data/management information acquiring step and the AV data management information already recorded at the recording step, it is determined that the management information with the largest number of pieces of the added associated management information is the latest, and wherein at the reproduction controlling step, the AV data and the associated AV data are concurrently reproduced and controlled with the use of the determined latest management information.

A twenty-ninth technical means is the AV data managing method of the twenty-seventh or twenty-eighth technical means, comprising a determining step of determining whether or not the associated AV data corresponding to each piece of the associated management information included in the AV data management information recorded at the recording step are recorded in a certain recording area, wherein if the associated AV data are not recorded in the recording area as a result, the associated management information corresponding to the associated AV data is disabled.

A thirtieth technical means is the AV data managing method of the twenty-ninth technical means, comprising a deleting step of selectively deleting only the associated AV data recorded in the recording area out of the associated AV data that are managed by the AV data management information obtained at the associated AV data/management information acquiring step.

A thirty-first technical means is an AV data management information producing/providing method wherein when associated AV data associated with AV data recorded in a recording medium are produced, management information of the AV data having associated management information added correspondingly to the associated AV data is produced to enable the produced associated AV data and the AV data management information to be provided.

A thirty-second technical means is a recording and reproducing apparatus having an external device interface that reads AV data recorded in the recording medium and a network interface that connects with a server that records a plurality of associated AV data associated with the AV data recorded in the recording medium, wherein the recording and reproducing apparatus comprises downloading means that download the plurality of the associated AV data as well as management information of the AV data that has associated management information added for managing the reproduction process of the associated AV data from the server into a certain recording area; and reproduction controlling means that concurrently reproduce and control the AV data recorded in the recording medium and the downloaded associated AV data in accordance with the downloaded management information.

A thirty-third technical means is the recording and reproducing apparatus of the thirty-second technical means, wherein as a result of retrieving the AV data management information recorded in the server and the AV data management information already recorded in the recording area, it is determined that the management information with the largest number of pieces of the added associated management information is the latest, and wherein the reproduction controlling means concurrently reproduces and controls the AV data and the associated AV data with the use of the determined latest management information.

A thirty-fourth technical means is the recording and reproducing apparatus of the thirty-second or thirty-third technical means, comprising a determiningmeans that determines whether or not the associated AV data corresponding to each piece of the associated management information included in the AV data management information downloaded by the downloading means are downloaded into the recording area, wherein if the associated AV data are not downloaded into the recording area as a result, the associated management information corresponding to the associated AV data is disabled.

A thirty-fifth technical means is the recording and reproducing apparatus of the thirty-fourth technical means, comprising a deleting means that selectively deletes only the associated AV data downloaded into the recording area out of the associated AV data that are managed by the AV data management information downloaded by the downloading means.

A thirty-sixth technical means is a server that can be connected to the recording and reproducing apparatus of any one of the thirty-second to thirty-fifth technical means, wherein when associated AV data associated with AV data recorded in a recording medium are produced, management information of the AV data having associated management information added correspondingly to the associated AV data is produced to enable the produced associated AV data and the AV data management information to be provided.

### EFFECT OF THE INVENTION

According to the invention, by accessing to an external recording medium or a server that records content including AV data or application programs/data to record the content into local storage and by adding access constraint to any content recorded in the external recording medium or local storage in a recording and reproducing apparatus that reproduces or executes the recorded content, unauthorized copying or alteration due to the content can be prevented.

First, by automating installation process and load process of the content to be installed and by calling a common function (installation or load) with the content in execution when such processes are performed, since only allowed content to be installed can be installed/loaded, the unauthorized copying can be prevented. By constraining access of the content in execution, the alteration can be prevented.

Second, by determining the reliability of the content and by applying access constraint to data read process and writing process at the time of the content execution different from the installation process and the load process depending on the reliability, unauthorized copying and alteration can be prevented. That is, the alteration can be prevented by constraining the writing process and the unauthorized copying can be prevented by constraining the combination of the read process and the writing process.

When reproducing multiplexed AV data (original AV data), associated management information of a plurality of associated AV data not included in the original AV data can be added to the management information of the original AV data; the original AV data and the associated AV data can be combined and reproduced concurrently using the management information with the associated management information added; and, therefore, if the plurality of the associated AV data are added to the original AV data later, the AV data can be arbitrarily combined and reproduced concurrently.

Since management information of the original AV data and the associated AV data can be bundled together, the data areas can be conserved on the recording and reproducing apparatus and the server.

Furthermore, since the original AV data and the associated AV data can be combined and reproduced concurrently if a recording medium recording the original AV data is different from a recording medium recording the plurality of the associated AV data, in a recording and reproducing apparatus with a recording area, subtitle data and audio data can be recorded and utilized in the recording area for combining and reproducing with AV data recorded on a reproduction-only recording medium.

### BRIEF DESCRIPTION OF THE DRAWINGS

[Fig. 1] Fig. 1 is a block diagram for describing an internal configuration example of a recording and reproducing apparatus according to an embodiment of the present invention.
[Fig. 2] Fig. 2 is a flowchart for describing an example of common installation process for all or some of content.
[Fig. 3] Fig. 3 is a flowchart for describing an example of common deletion (uninstallation) process for all or some of content.
[Fig. 4] Fig. 4 is a block diagram for describing a detailed configuration example of a processing unit shown in Fig. 1.
[Fig. 5] Fig. 5 is a diagram showing an example of access constraint depending on reliability of an application program.
[Fig. 6] Fig. 6 is a diagram showing an example of a file structure recorded on a ROM disk.
[Fig. 7] Fig. 7 is a diagram showing an example of content of an install.info file 35.
[Fig. 8] Fig. 8 is a diagram showing an example of a file structure recorded on a hard disk.
[Fig. 9] Fig. 9 is a diagram showing another example of a file structure recorded on a ROM disk.
[Fig. 10] Fig. 10 is a diagram showing another example of a file structure recorded on a hard disk.
[Fig. 11] Fig. 11 is a diagram showing another example of a file structure recorded on a hard disk.
[Fig. 12] Fig. 12 is a diagram showing an example of applying three access constraint levels to three reliability levels.
[Fig. 13] Fig. 13 is a block diagram for describing an internal configuration example of a recording and reproducing apparatus according to another embodiment of the present invention.
[Fig. 14] Fig. 14 is a diagram showing a configuration example of original AV data recorded on a ROM disk.
[Fig. 15] Fig. 15 is a diagram for describing an example of correlation of downloaded associated AV data with management information of the associated AV data downloaded along with the associated AV data.
[Fig. 16] Fig. 16 is a diagram for describing another example of correlation of downloaded associated AV data with management information of the associated AV data downloaded along with the associated AV data.
[Fig. 17] Fig. 17 is a diagram for describing another example of correlation of downloaded associated AV data with management information of the associated AV data downloaded along with the associated AV data.
[Fig. 18] Fig. 18 is a flowchart for describing an example of a method of downloading the associated AV data and the management information thereof.
[Fig. 19] Fig. 19 is a flowchart for describing an example of a method of reproducing AV data.
[Fig. 20] Fig. 20 is a diagram showing a configuration example of the management information and the associated AV data recorded in a recording area within the recording and reproducing apparatus.
[Fig. 21] Fig. 21 is a diagram for describing an example of correlation of the associated information and the original AV data recorded on a ROM disk with the management information and the associated AV data recorded in the recording area within the recording and reproducing apparatus.
[Fig. 22] Fig. 22 is a flowchart for describing a method of deleting the associated AV data recorded in the recording area within the recording and reproducing apparatus.
[Fig. 23] Fig. 23 is a diagram showing an example of the management information and the associated AV data recorded in the recording area after Downloaded Clip Info3 and Downloaded Clip AV Stream3 are deleted from the recording area shown in Fig. 20.
[Fig. 24] Fig. 24 is a diagram showing an example of correlation of the associated information and the original AV data recorded on the ROM disk with the management information and the associated AV data recorded in the recording area within the recording and reproducing apparatus after Downloaded Clip Info3 and Downloaded Clip AV Stream3 are deleted from the recording area shown in Fig. 20.
[Fig. 25] Fig. 25 is a diagram showing a configuration example of data recorded on a conventional disk-shape recording medium.
[Fig. 26] Fig. 26 is a flowchart fordescribinga reproducing method when reproducing the AV data managed by the Playlist shown in Fig. 25 from the beginning.

### PREFERRED EMBODIMENTS OF THE INVENTION

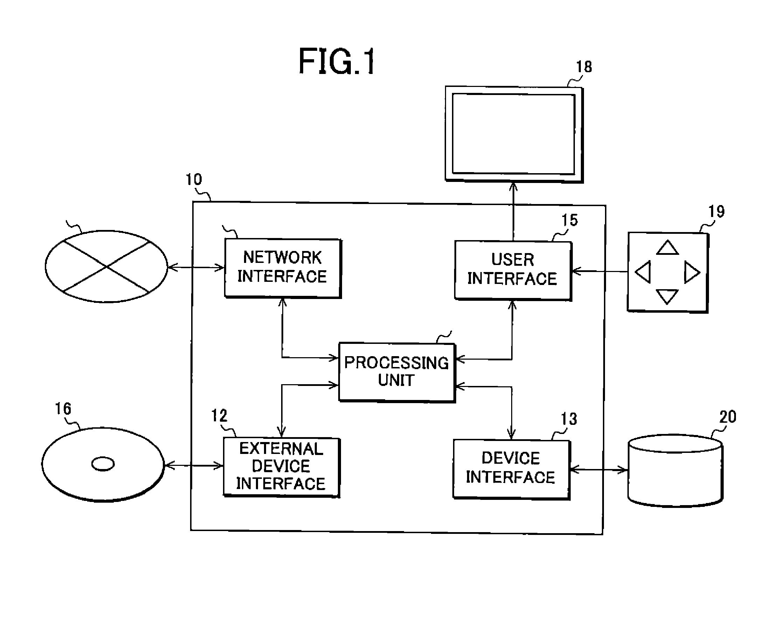

Description will hereinafter be made of an embodiment of a recording and reproducing apparatus and a file accessingmethod according to the present invention. Fig. 1 is a block diagram for describing an internal configuration example of a recording and reproducing apparatus according to an embodiment of the present invention; in the figure, 10 is a recording and reproducing apparatus; and the recording and reproducing apparatus 10 is constituted by a processing unit 11, an external device interface 12, a device interface 13, a network interface 14, and a user interface 15. The processing unit 11 uses the information obtained from each interface to decode AV data or to execute application programs. The external device interface 12 can read data such as AV data and application programs from an external recording medium 16 and deliver the data to the processing unit 11.

The external recording medium 16 refers to a ROM (or RAM) disk including, for example, CD-ROM, CD-R (-RW), DVD-ROM (-R/-RW/-RAM), etc., and a semiconductor memory such as a memory card. The data recorded on the external recording medium 16 may be recorded by other than the recording and reproducing apparatus 10.

In the following description, AV data or application programs/data groupedmeaningfully are defined as content. The AV data refers to all or some of the information necessary for reproducing one or both of video and audio. The application program refers to all or some of the information necessary for executing an application. The content is constituted by all files constituting the AV data corresponding to one title or by a program file and all data files constituting one game or application.

The network interface 14 can download data via network 17 from a server (not shown) connected to the network 17 and deliver the data to the processing unit 11. Although this example is configured such that the data can be obtained from either the external recording medium 16 or the network 17, this is not a limitation and the data may be obtained from only one of the external recording medium 16 and the network 17.

The user interface 15 is connected to a display 18 and a controller 19. The processing unit 11 can output such as the AV data through the user interface 15 to the display 18 to allow a user to view the AV data. A request from the user input from the controller 19 is transmitted through the user interface 15 to the processing unit 11.
The device interface 13 can read data from a recording medium (local storage) 20 and write data into the recording medium 20. The recording medium 20 may be a recording medium such as an internal or external hard disk apparatus and a recordable optical disk or memory card. The data recorded in the recording medium 20 (hereinafter, represented by a recorder 20) are data recorded by the recording and reproducing apparatus 10.

The processing unit 11 executes the content (AV data or application programs) prepared in advance or the content read through either interface and performs file access process, which is one type of the processes in this case.

The file access process in the recording and reproducing apparatus 10 includes the following three types:
(Process 1) installation process for reading all or some of the content from the external recording medium 16 or a server via the network 17 to record into the recorder 20 in an identifiable format;
(Process 2) load process for reading programs and data necessary for reproducing or executing the content from the recorder 20, the external recording medium 16, or the server via the network 17 onto the internal memory; and
(Process 3) write or read process of data produced by the content itself.

The present invention adds access constraint to the file access process to prevent unauthorized copying and alteration as follows.

Description will be made of the installation process (Process 1) for reading the content from the external recording medium 16 or a server via the network 17 to record into the recorder 20 in an identifiable format.
Among the data in the external recording medium 16 or the server accessible through the network 17, only the data authorized by the data provider must be installed to prevent the installation of other data, i.e., the unauthorized copying.
The installed data must not be altered. To this end, the process necessary for the installation is defined in common and the content in execution gives a trigger only to the common process.
In this case, to achieve the installation easily, it is desirable that management information managing meaningful grouped content (AV data or application programs) exists in an installation source.

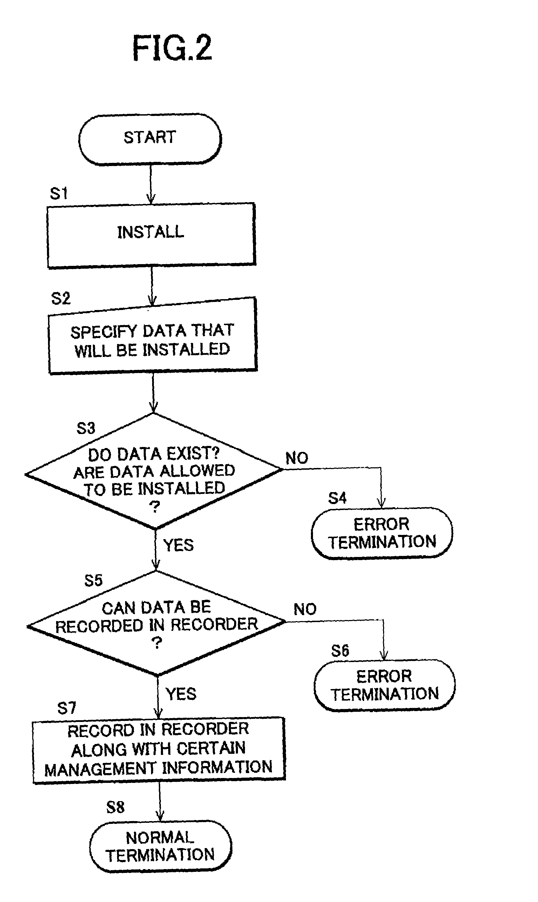

Fig. 2 is a flowchart for describing an example of common installation process for all or some of content. At the start of the installation process (step S1), the recording and reproducing apparatus 10 specifies in the external recording medium 16 or the server accessible via the network 17 all or some of content wanted to be installed (step S2). It is checked whether or not all or some of the content is content allowed by a content provider to be installed (step S3). For example, in a specific checking method, the determination may be performed with the format or metadata of all or some of the content.

At step S3, if all or some of the content is not the content allowed to be installed (in the case of NO), an error is returned to terminate the process (step S4). At step S3, if all or some of the content is the content allowed to be installed (in the case of YES), the recorder 20 is checked. It is checked whether or not the recorder 20 has sufficient available capacity and whether or not mismatching may be produced with all or some of content recorded previously (step S5).

At step S5, if the recorder 20 does not have sufficient capacity or if mismatching may be produced with all or some of content recorded previously (in the case of NO), an error is returned to terminate the process (step S6). At step S5, if the content can be recorded in the recorder 20 (in the case of YES), all or some of the content to be installed is recorded in the recorder 20 along with a certain management information (step S7), and success of the process is returned to terminate the process (step S8). The certain management information is information for distinctively managing all or some of the installed content in the recorder 20, which also is information for consistency of all or some of the content and which is information used when all or some of the content is deleted (uninstalled).

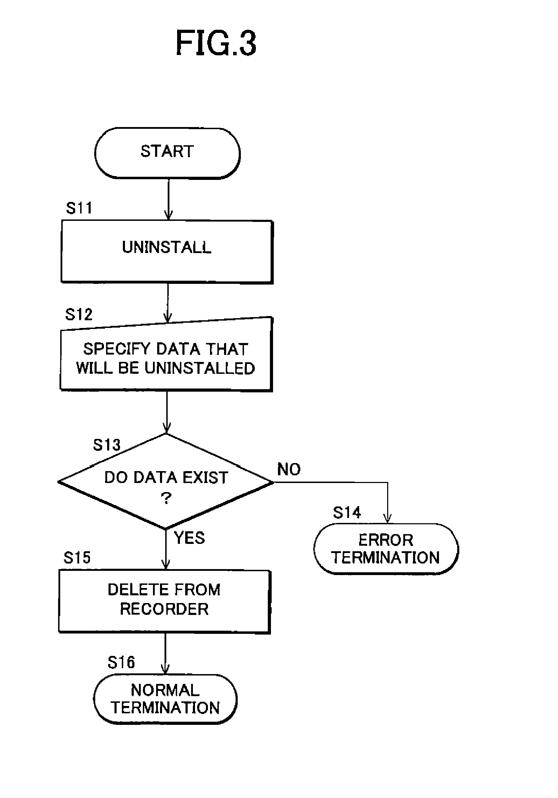

Fig. 3 is a flowchart for describing an example of common deletion (uninstallation) process for all or some of the content. At the start of the uninstallation process (step S11), the recording and reproducing apparatus 10 specifies all or some of content wanted to be uninstalled in the recorder 20 (step S12). It is checked whether all or some of the content exists in the recorder 20 or not (step S13).

At step S13, if all or some of the content does not exist in the recorder 20 (in the case of NO), an error is returned to terminate the process (step S14). At step S13, if all or some of the content exists in the recorder 20 (in the case of YES), the certain management information recorded along with all or some of the content is used for deleting all the files included in all or some of the content and the management information thereof from the recorder 20 (step S15) and success of the process is returned to terminate the process (step S16).

Description will be made of the load process (Process 2) for reading programs and data necessary for reproducing or executing the content from the recorder 20, the external recording medium 16, or the server via the network 17 onto the internal memory. In the load process, the process necessary for the loading is defined in common and the content in execution gives a trigger only to the common process, as is the case with the installation process.
In the load process, the programs and the data are loaded onto the internal memory to reproduce or execute the content from any of the recorder 20, the external recording medium 16, or the server accessible via the network 17 in a similar manner. Since the load process is read process and does not need writing process, the alteration or the unauthorized copying does not be performed directly.

Description will be made of the write and read process (Process 3) of data produced by the content itself.
A file system supplied to the content can access basically any of the recorder 20, the external recording medium 16, or the server accessible via the network 17 in a similar manner. However, writing to a read-only recording medium cannot be performed. For example, if the external recording medium 16 is a read-only recording medium such as CD-ROM, the file system cannot use to write to the external recording medium 16. The following condition is added to the file system.
- The content (AV data and application programs) loaded by the (process 2) into the internal memory of the processing unit 11 cannot be accessed.
   With this condition, the content can be prohibited from reading or changing the loaded data.

The file system of the content may be unable to access other or all contents recorded in the external recording medium 16 or may be unable to access other or all contents installed in the recorder 20. The file system may be prohibited from accessing the recorder 20, the external recording medium 16, and the server via the network 17.

However, the content can issue an installation instruction and uninstallation instruction calling (Process 1) or a reproduction instruction and application execution instruction including the load process of (Process 2).

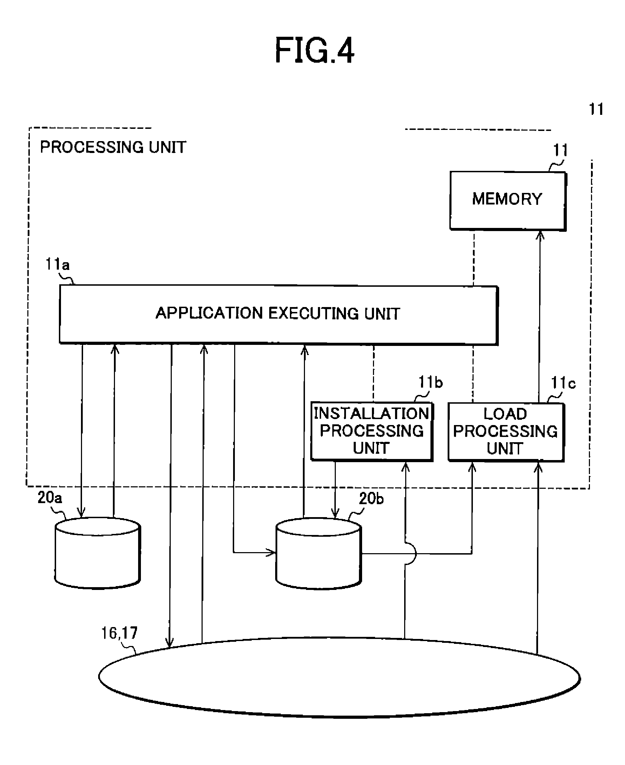

The aforementioned process is summarized in Fig. 4.
Fig. 4 is a block diagram for describing a detailed configuration example of a processing unit 11 shown in Fig. 1 and the processing unit 11 includes an application executing unit 11a, an installation processing unit 11b, a load processing unit 11c, and a memory 11d. Recording medium 20a, 20b may be different recording portions included in the recorder 20 shown in Fig. 1 or may be independent recordingmedium. Theprocessing unit 11 can access the external recording medium 16 or the server connected to the network 17 (hereinafter, represented by the external recording medium 16). In this embodiment, each interface shown in Fig. 1 is omitted.

In Fig. 4, the application executed in the application executing unit 11a can access the content (AV data or application programs) recorded in the recordingmedium 20a, 20b, the external recording medium 16 basically and can perform recording into the external recording medium 16. The application can issue an instruction to the installation processing unit 11b and the load processing unit 11c.

The installation processing unit 11b can read the content recorded in the external recording medium 16 and write the content to the recording medium 20b. The installation processing unit 11b can delete the content recorded in the recording medium 20b. The installation processing unit 11b accepts the installation instruction from the content to execute the installation process. Therefore, at the time of the installation process, the content cannot directly access the external recording medium 16 and the recording medium 20b.

The load processing unit 11c can read the content from the external recording medium 16 or the recording medium 20b and write the content to the memory 11d. The load processing unit 11c accepts the load instruction from the content to execute the load process. Therefore, at the time of the load process, the content cannot directly access the external recording medium 16 and the recording medium 20b.

The memory 11d stores only the contents written by the load processing unit 11c. The contents are the application executed by the application executing unit 11a, and the variables, etc. used by the application are not stored in this area. This application cannot refer to data stored in the memory 11d.

Some application programs (or AV data, hereinafter, represented by the application programs) can copy the data recorded in the external recording medium 16 to the recording media 20a, 20b or other external recording media. The creator or provider of the data recorded in the external recording medium 16 may not want the data to be copied and may not admit the legitimacy of the copying. Description will be made of a method of evaluating the reliability of the application program to constrain access depending on the reliability in consideration of the presence of the application program that executes such unauthorized copying.

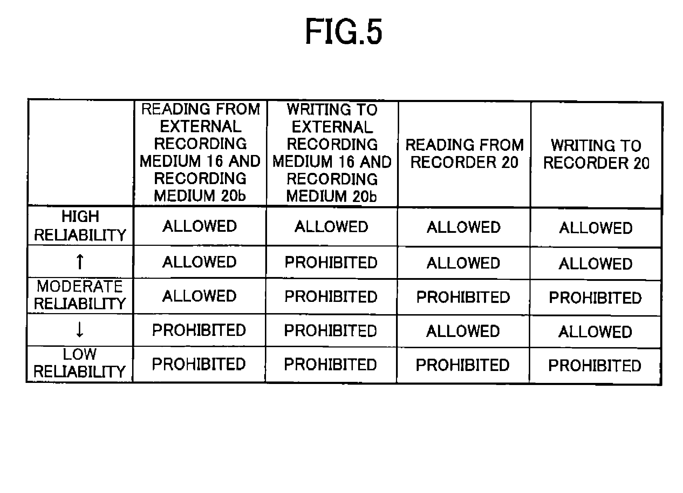

Fig. 5 is a diagram showing an example of the access constraint depending on the reliability of the application program. For example, the application program with the highest reliability can perform all accesses allowed in the application executing unit 11a. The application program with a certain level of reliability is prohibited only from writing to the external recording medium 16 and the recording medium 20b. The application program with the next level of reliability is allowed only to read from the external recording medium 16 and the recording medium 20b. The application program with less reliability is prohibited from accessing the external recording medium 16 and the recording medium 20b. In the case of the application program with the lowest reliability, all accesses are prohibited. However, the combination of the reliability of the application program and the access constraint is not limited to above examples. The external recording medium 16 and the recording medium 20b may not be handled identically in the constraint.

An example of a method of evaluating the reliability of the application program is as follows.
For example, in one method, the reliability is determined by authentication process such as checking metadata of the application program. If a plurality of application platforms exists, the reliability may be determined by which platform the application program operates on. For example, an execution environment of a macro language included in AV data cannot generate an elaborate program. Therefore, because unauthorized process cannot be achieved, it may be determined that the reliability is high.

It is assumed that the external recording medium 16 is a read-only recording medium that can be manufactured only by a certain manufacturer. In this case, it may be determined that the application program loaded from the external recording medium 16 has high reliability. Similarly, if the installation source of the application program installed in the recorder 20 is a read-only recording medium that can be manufactured only by a certain manufacturer, it may be determined that the application program has high reliability. If an address of one of servers on network is recorded as a credible address in a read-only recording medium that can be manufactured only by a certain manufacturer, it may be determined that the application program has high reliability. By combining these conditions, the reliability of the application program can be evaluated.

Description will be made of the aforementioned recording and reproducing apparatus 10 with a specific example.
The target recording and reproducing apparatus 10 has a function for reproducing AV data recorded on a ROM disk as is the case with a DVD player. In addition to the AV data, the recording and reproducing apparatus 10 can read an application program written in the Java (registered trademark) language from a ROM disk to execute the application. In addition to a ROM disk, the recording and reproducing apparatus 10 can execute AV data and application programs, through a network interface. The recording and reproducing apparatus 10 has an interface with a recordable medium, can install the AV data and application programs, and can read from the recordable medium and reproduce/execute the AV data and application programs. The application programs can write and read any data to and from the recordable medium.

Although the recording and reproducing apparatus 10 can reproduce/execute both the AV data and the application programs in the example of the embodiment, the recording and reproducing apparatus 10 maybe a device that can execute only the application program. The description language of the application programs in this example is not limited to the Java (registered trademark) language and may be any languages, for example, the BASIC language, the C language, a prepared macro language, etc., as long as the language is an executable environment that can read and execute program data. Although interfaces for both the ROM disk and the network are prepared to form interfaces for reading the AV data and the application programs in this example, only one interface may be prepared instead.

The content recorded on the ROM disk such as DVD is often not allowed to be replicated or modified because of the intention of an author or a provider. With regard to similar replication and modification including such a case, description will be made of a method of preventing the replication and modification of the content with the use of the recording and reproducing apparatus 10 of the present invention.

An apparatus configuration will be described with reference to Fig. 1 described above. The external recording medium 16, the recorder 20, the external device interface 12, and the device interface 13 are replaced with a ROM disk 16, a hard disk 20, a ROM disk interface 12, and a hard disk interface 13, respectively, in the recording and reproducing apparatus 10.

The processing unit 11 uses information obtained from each interface to decode the AV data or to execute the application programs. The ROM disk interface 12 can read data such as the AV data and the application programs from the ROM disk 16 to deliver the data to the processing unit 11. The network interface 14 can download data from a server (not shown) via the network 17 to deliver the data to the processing unit 11.

The user interface 15 is connected to the display 18 and the controller 19. The processing unit 11 can output the AV data through the user interface 15 to the display 18 to allow a user to view the AV data. A request from the user input from the controller 19 is transmitted through the user interface 15 to the processing unit 11. The hard disk interface 13 can read data from the hard disk 20 and write data into the hard disk 20. The hard disk 20 of this example is not a limitation and a RAM disk or a memory card may be used instead. The hard disk 20 may be built into or attached externally to the recording and reproducing apparatus 10.

The processing unit 11 executes the content (AV data or application programs) prepared in advance or the content read through either interface and performs file access process, which is one type of the processes in this case.

Description will be made of a process of installing the content (AV data or application programs), which is read via the ROM disk interface 12 or the network interface 14, into the hard disk 20 via the hard disk interface 13.

The installation is to record the content of the ROM disk 16 or a server accessible via the network 17, which is allowed to be copied to the hard disk 20, into the hard disk 20 in an identifiable format. A group of the installable contents are referred to as a package. For example, the package is one movie, a trailer (a preview of a movie), or a game. The package may reinforce the content of the ROM disk 16. For example, the package is subtitle information in the language not included in the content of the ROM disk 16 and the management information enabling the subtitle information to be reproduced.

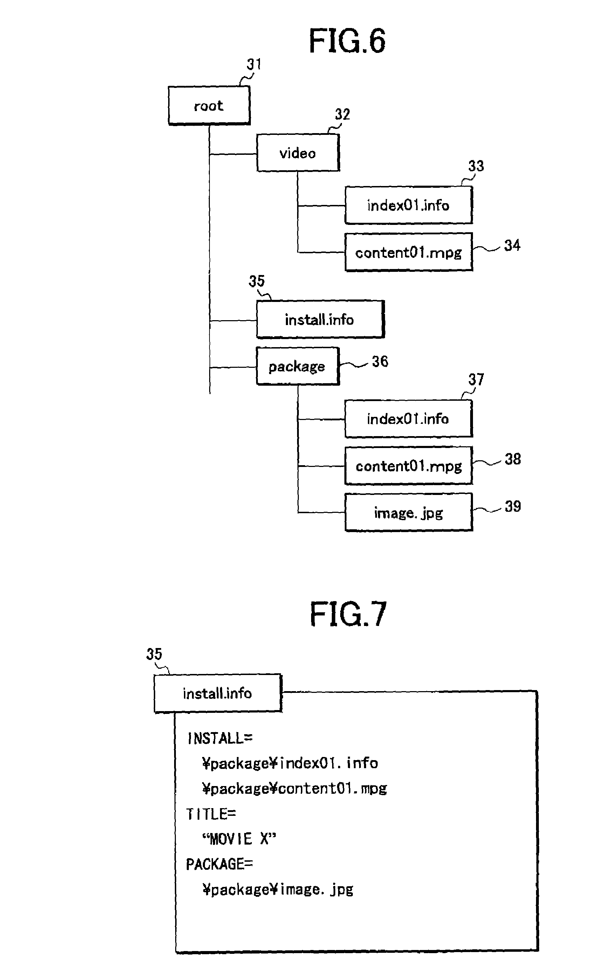

Description will be made of an example of a method of determining the content of the ROM disk 16, which is allowed to be installed, with reference to Figs. 6 and 7.
Fig. 6 is a diagram showing an example of a file structure recorded on the ROM disk 16.
In the file configuration of the ROM disk 16 shown in Fig. 6, a folder 32 with a name "video", a file 35 with a name "install.info", and a folder 36 with a name "package" are located under a root directory 31. The video folder 32 is a folder referred automatically when the AV data of the ROM disk 16 is reproduced. A file 33 with a name "index01.info" in this folder 32 is a management information file that controls the reproduction order and a file 34 with a name "content01.mpg" is a file recording the entity of the AV data. For example, the index01.info file 33 is loaded and the content01.mpg file 34 is reproduced in accordance with the description thereof.

Although the index01.info file 33 manages the AV data that can be reproduce, this may manage an executable program file. Alternatively, the file 33 itself may be an executable program file. One management information file may manage a plurality of AV data or program files. Furthermore, a plurality of the management information file may exist. In this case, a name of a file loaded by default must be identified. The install.info file 35 manages files that are allowed to be installed.

Fig. 7 is a diagram showing an example of content of the install.info file 35. The install.info file 35 records paths to the files that are allowed to be installed, a title for management and display, and a path to a display image file. The package folder 36 includes a file 37 with a name "index01.info", a file 38 with a name "content01.mpg", and a file 39 with a name "image.jpg". The index01.info file 37 is a management information file that controls the reproduction order and the content01.mpg file 38 is a file recording the entity of the AV data.

It is known that the files allowed to be copied shown in Fig. 7 are the index01.info file 37 and the content01.mpg file 38 and that the display image file is the image.jpg file 39. The display image file is a representative image when the installed package is presented to a user and may be an image such as that printed on a surface of a DVD disk case. A file registered in the install.info file 35 will be a target of the installation and a file not registered will not be a target of the installation. Although the install.info file 35 manages one package in the above example, this is not a limitation and a plurality of packages may be managed. Alternatively, a plurality of the install information files may be created.

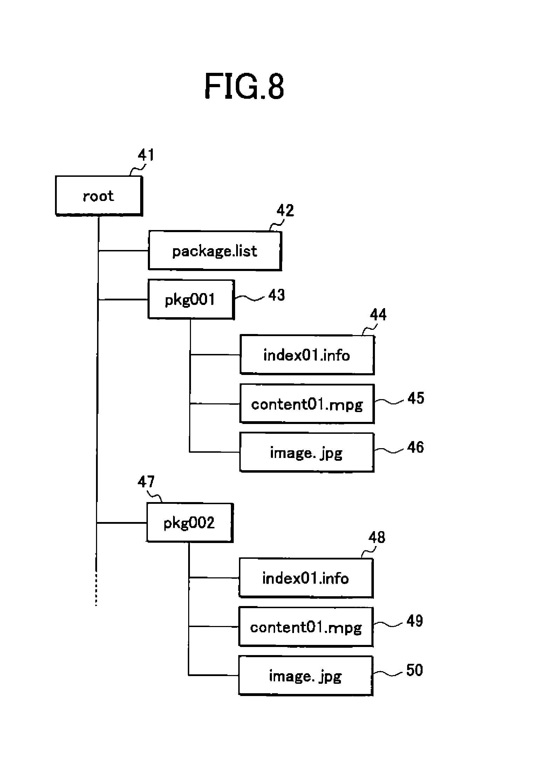

Fig. 8 is a diagram showing an example of a file structure recorded on the hard disk20. A file 42 with a name "package.list" is located under a root directory 41. The package.list file 42 is a management information file managing each installed package as well as a conversion table for handling a folder of each package equivalently to the video folder of the ROM disk 16. The installed package is recorded in a folder prepared by the system in the same format as the video folder.

For example, the package is recorded like an index01.info file 44 and a content01.mpg file 45 in a pkg001 folder 43. Reproduction means of these data are the same as the aforementioned reproduction procedure of the content of the ROM disk. A display image file is also recorded in the same folder. This is an image.jpg file 46, for example. Paths to these data are correlated with a management title and recorded in a package.list file 42.

Similarly, the package is recorded like an index01.info file 48 and a content01.mpg file 49 in a pkg002 folder 47. A display image file is also recorded in the same folder. This is an image.jpg file 50, for example.

The above process is executed by calling an installation command from the application program. The installation command is processed automatically by specifying a device, for example. If a plurality of packages exists in the device, the process can be achieved by using a command for obtaining a management title and an installation command for specifying the management title together.

If necessary, the version upgrade of the package may be introduced. If different versions exist for a package managed by the same management title, the process is automatically performed to replace an old version package with a new version package. The application program is achieved by calling a version upgrade command. If necessary, the versions of package and each file are recorded in the install.info file 35 shown in Fig. 6 and the package.list file 42 shown in Fig. 8.

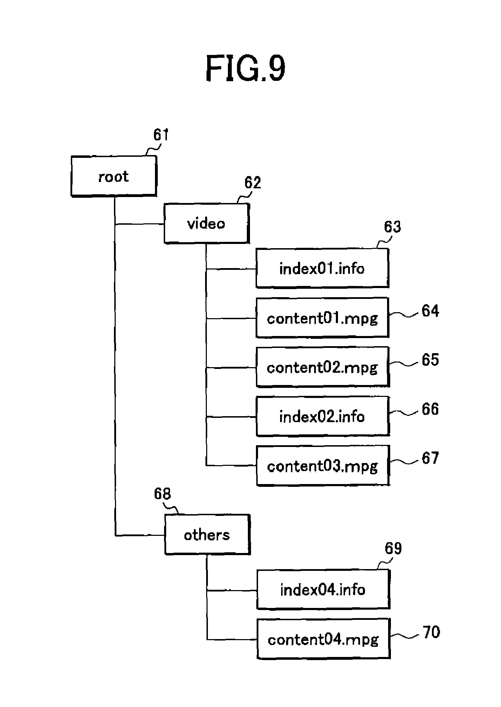

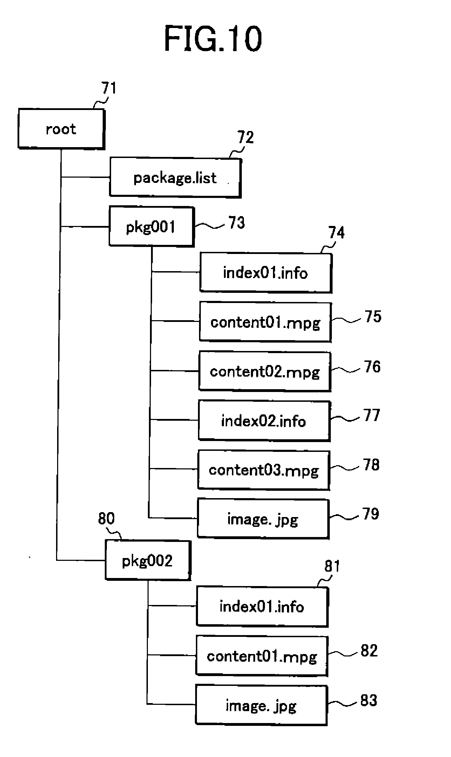

Description will be made of a method of loading and reproducing/executing the content of the ROM disk 16, the server accessible via the network 17, or the hard disk 20.
The reproduction of the content is performed by specifying the management information file. Two methods exist for specifying the management information file, which are a method of directly specifying the management information file on the device and a method of specifying the device to specify the management information file specified in the device by default. Description will be made of a method of specifying the reproduction/execution files with reference to Figs. 9 and 10.

Fig. 9 is a diagram showing another example of a file structure recorded on the ROM disk 16 and Fig. 10 is a diagram showing another example of a file structure recorded on the hard disk 20.
In the file configuration of the ROM disk 16 shown in Fig. 9, a video folder 62 is located under a root directory 61; an index01.info file 63 manages a content01.mpg file 64 and a content02.mpg file 65; an index02.info file 66 manages a content03.mpg file 67; and an idnex04.info file 69 below an others 68 manages a content04.mpg file 70, respectively.

If the management information file is specified directly, the ROM disk 16 is specified as the device, and the management information file, for example, the index02.info file 66 is specified with a full path. Even if a file is not located under the video folder 62, for example, the idnex04.info file 69 can be specified. In this example, since the file specified by default is the index01.info file 63 under the video file 62, when the ROM disk interface 12 is specified, the index01.info file 63 is specified as the reproduction/execution target file.

The same process as above can be performed for the server via the network 17. For example, the management information file on the server may be specified directly. In the case of the http protocol, for example, "http://www.sharp.co.jp/index05.info" can be specified.

In the file configuration of the hard disk 20 shown in Fig. 10, an example of how to handle the hard disk is to recognize each package of the hard disk 20 as a virtual device managed by each management title. A package.list file 72 is assumed to records that under a root directory 71, for example, a pkg001 folder 73 and files under the folder (an index01.info file 74, a content01.mpg 75, a content02.mpg 76, an index02.info file 77, a content03.mpg 78, and an image.jpg 79) are a package correlated with a management title "AAA" and that a pkg002 folder 80 and files under the folder (an index01.info file 81, a content01.mpg 82, and image.jpg 83) are a package correlated with a management title "BBB".

If the management information file is specified directly, for example, the "AAA" is specified as a device and the management information tile index02.info file 77 is specified with a full path. When only the device "BBB" is specified, the index01.info file 81 specified by default is specified.

The content specified as above is executed by loading the data necessary for a certain memory for reproduction/execution. This process is executed by calling a reproduction command or an execution command from the application program.

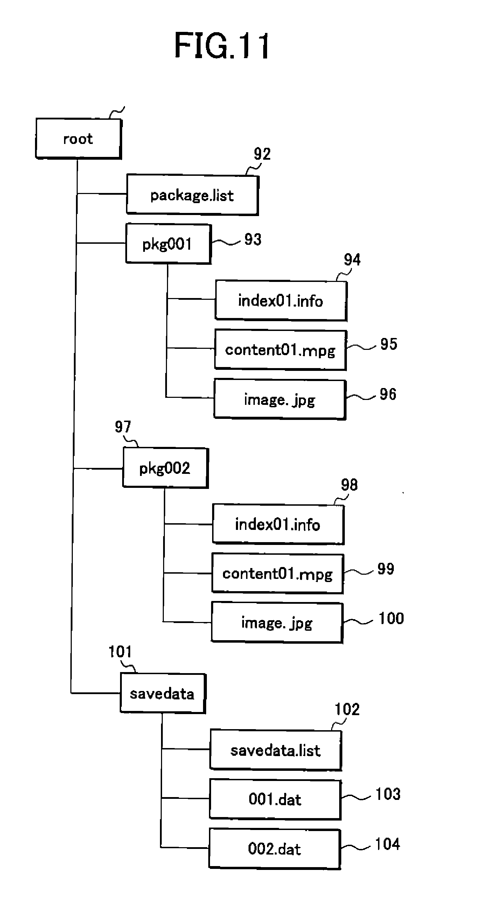

Description will be made of the access allowed in an any application program. An any application program cannot access the content (AV data or application programs) loaded on the memory. The application program has a certain area in the hard disk 20 for reading and writing the data produced by the application. The certain area example will be described with reference to Fig. 11.

Fig. 11 is a diagram showing another example of a file configuration recorded on the hard disk 20. Under a root directory 91, with regard to a package.list 92, a pkg001 folder 93, an index01.info file 94, a content01.mpg file 95, an image.jpg file 96, a pkg002 folder 97, an index01.info file 98, a content01.mpg file 99, and image.jpg file 100, the description is the same as above. In this example, the file structure additionally has a savedata folder 101, and files under the savedata folder 101 are managed by a savedata.list file 102.

The savedata.list file 102 is a management file that manages the files under the savedata folder 101. Under the savedata folder 101, the file structure has a 001.dat file 103 and a 002. dat file 104 correlated with each application program by the savedata.list (management information) file 102. The file correlated to an any application program corresponds to the certain area. Therefore, each application program can perform the write/read access only to the file managed by the savedata.list (management information) file 102 and prepared under the savedata folder 101. The access to the folder forming each package can be performed in the same access procedure as the load process as is the case with the external recording medium 16.

Furthermore, an any application program can read data of the ROM disk 16 or the server accessible via the network 17.

The aforementioned access constraint can prohibit at least alteration of the data loaded on the memory for reproduction/execution. However, an any application program can read the data of the ROM disk 16, the hard disk 20, or the server accessible via the network 17 to record the data into the hard disk 20. Regardless of the feasibility of reproduction or execution of the recorded data, this may be the unauthorized copying.

Therefore, a method is applied for changing the access constraint depending on the reliability of the application program. Description will be made of a method of determining the reliability of the application.
For example, first, if the ROM disk 16 is difficult to be manufactured by general users, the ROM disk 16 is manufactured only by certain manufacturers. Therefore, if it is known that these manufactures are credible, the data of the ROM disk 16 are credible. Since installed data cannot be altered, the data installed from the ROM disk 16 are also credible. Second, the data of the server indicated by a network address recorded in the ROM disk 16 are credible and the data installed from that server are credible. However, since a problem may be produced by counterfeiting the network, the reliability is somewhat reduced. Third, it is determined that data of serveres indicated by unspecified network addresses and data installed from those serveres have the lowest reliability.

If a criterion is needed for the reliability of the installed data, a flag representing the above three reliability levels may be recorded in the management information such as the package.list file.

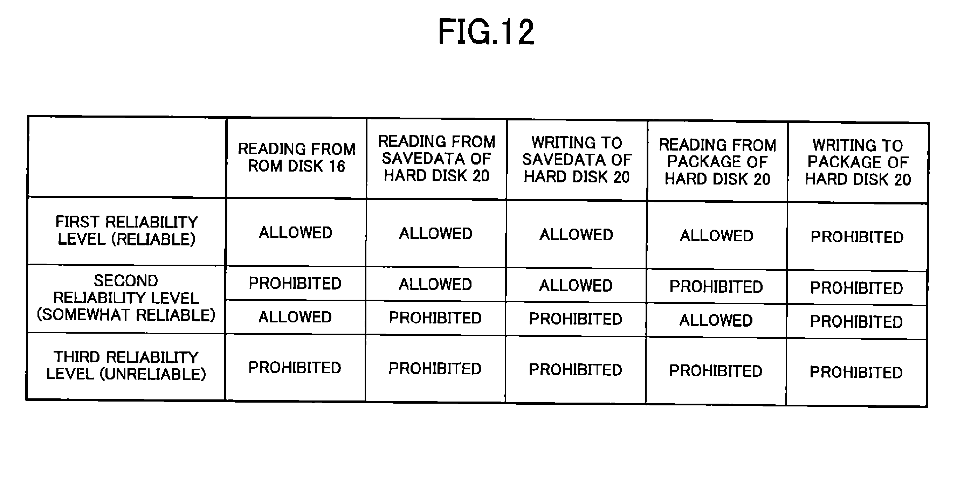

Fig. 12 is a diagram showing an example of applying three access constraint levels to three reliability levels. The writing to the ROM disk 16 is originally impossible. Since it is credible that a most credible application program corresponding to a first reliability level does not perform unauthorized process, the application program is allowed to access to read from the ROM disk 16, to write and read to and from the files corresponding to the application under the savedata folder 101 of the hard disk 20, and to read from the packages (e.g., pkg001 folder 93) of the hard disk 20 and it is prohibited to write to the packages (e.g., pkg001 folder 93) of the hard disk 20.

Contrary, the application program with the lowest reliability corresponding to a third reliability level is entirely prohibited from accessing to both the ROM disk 16 and the hard disk 20.
The somewhat credible application program at a second reliability level is subjected to any of the following constraints. In one case, the application program is prohibited from reading from the ROM disk 16, writing and reading to and from the packages (e.g., pkg001 folder 93) of the hard disk 20. In the other case, the application program is prohibited from writing and reading to and from the files corresponding to the application under the savedata folder 101 of the hard disk 20 and from writing to the packages (e.g., pkg001 folder 93) of the hard disk 20. By applying any of these constraints, data cannot be copied from the ROM disk 16 to the hard disk 20.

An external recording medium accessible from an application loaded from an external recording medium (hereinafter, "external recording medium A") is limited to the external recording medium A. A package accessible from an application loaded from an installed package (hereinafter, "package B") is limited to the package B. The possibility of the unauthorized copy may be prevented by implementing such functions. The unauthorized alteration may be prevented by prohibiting the writing from the application to the package.

Description will hereinafter be made of embodiments of an AV data managing method, an AV data management information producing/providing method, a recording and reproducing apparatus, and a server according to the present invention. Descriptionwillbemadeofa representative example of combining and concurrently managing and reproducing AV data recorded on a ROM disk, which is a disk-shape read-only recording medium, and associated AV data downloaded into a recording area within a recording and reproducing apparatus for reproducing the AV data based on the AV data managing method.

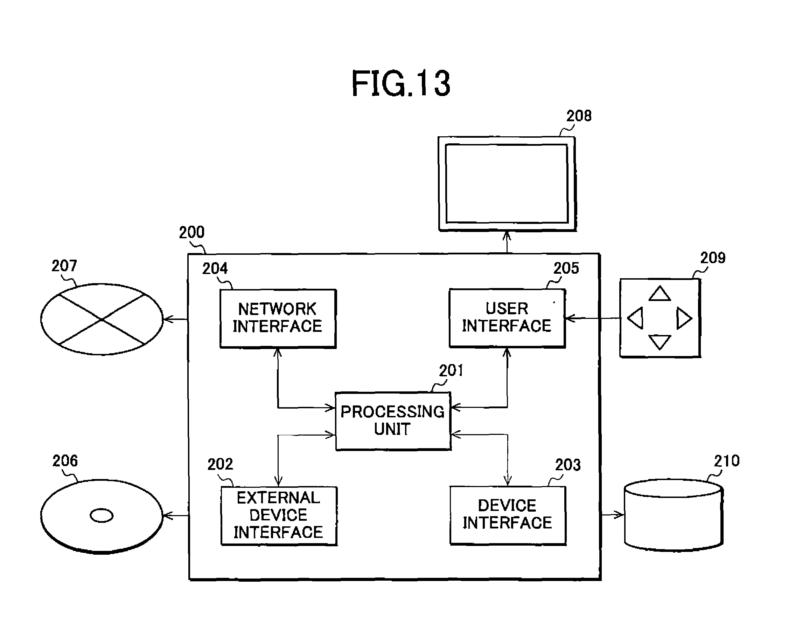

Fig. 13 is a block diagram for describing an internal configuration example of a recording and reproducing apparatus according to another embodiment of the present invention, and the recording and reproducing apparatus 200 is constituted by a processing unit 201, an external device interface 202, a device interface 203, a network interface 204, and a user interface 205. The basic configuration of the recording and reproducing apparatus 200 shown in this embodiment is the same as the recording and reproducing apparatus 10 shown in Fig. 1 and the description thereof is omitted.

In the following description, the AV data refer to video, audio, subtitles, or all or some of information necessary for reproduction thereof and, for example, one piece of the AV data is constituted by all program files and data files necessary for providing one movie, game, etc.

The network interface 204 can download the AV data via network 207 from a server (not shown) connected to the network 207 and deliver the data to the processing unit 201. Although this example is configured such that the AV data can be obtained from either the external recording medium 206 or the network 207, this is not a limitation and the data may be obtained from only one of the external recording medium 206 and the network 207.

The user interface 205 is connected to a display 208 and a controller 209. The processing unit 201 can output the AV data through the user interface 205 to the display 208 to allow a user to view the AV data. A request from the user input from the controller 209 is transmitted through the user interface 205 to the processing unit 201.

The device interface 203 can read the AV data from a recording medium 210 and write the AV data into the recording medium 210. The recording medium 210 may be an internal or external hard disk (magnetic storage) apparatus or a removable recording medium such as a ROM (or RAM) disk and a memory card that can record the AV data.

The processing unit 201 has a function for reproducing and controlling the AV data prepared in advance or the AV data read through either interface in accordance with the management information thereof and a function for downloading the AV data and the management information thereof recorded in a server, etc. and controls various types of processes performed by the recording and reproducing apparatus 200.

As described above, the recording and reproducing apparatus 200 of the embodiment has a function for reading the AV data from the external recording medium 206 such as the ROM disk to reproduce the AV data. The recording and reproducing apparatus 200 has a recording area within the apparatus and can record the downloaded AV data. However, the recording and reproducing apparatus 200 may have the recording area at a different location, rather than within the apparatus itself. The external recording medium 206 may be a RAM disk, rather than a ROM disk. The external recording medium 206 is not limited to disks and may be other recording media such as a semiconductor memory.

The recording and reproducing apparatus 200 according to the embodiment is configured such that a plurality of Subpaths for managing the AV data can be recorded in one Playlist.
In the following description of each embodiment, description will be made of a representative example when the external recording medium 206 is a ROM disk 206 and the recording medium 210 is a recording area 210 within the recording and reproducing apparatus 200 (hereinafter, recording area 210").

### <Correlation of Downloaded Associated AV Data with Management Information thereof>

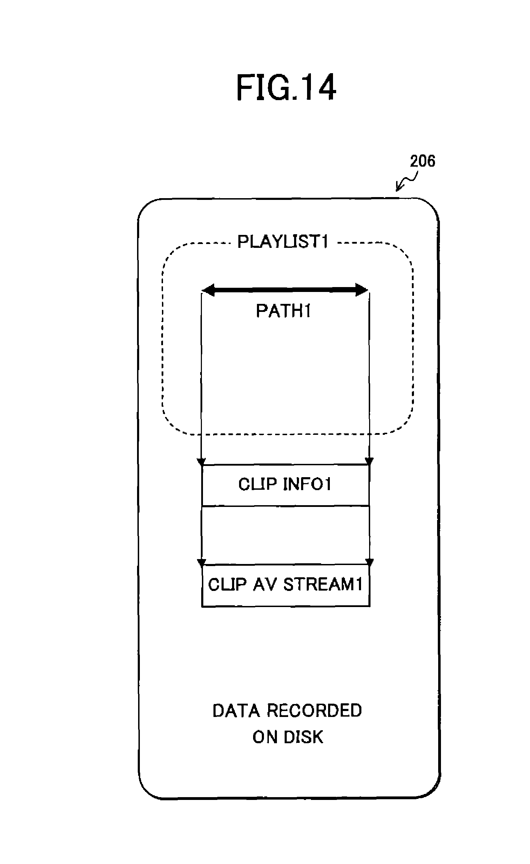

Description will be made of correlation of the associated AV data downloaded by using the recording and reproducing apparatus 200 with the management information thereof shown in Fig. 13. Description will be made of a method of creating the management information of the downloaded associated AV data with reference to Figs. 14 to 17.
Fig. 14 is a diagram showing a configuration example of the original AV data recorded on the ROM disk 206. In the ROM disk 206, Playlist1 is data corresponding to the Playlist shown in Fig. 25; Clip info1 is data corresponding to the Clip info shown in Fig. 25,; and Clip AV Stream1 is data corresponding to the Clip AV Stream shown in Fig. 25. Path1 is constituted by one or more Playitems and corresponds to the Playitem (Mainpath) shown in Fig. 25.

Description will be made of a method of creating and providing the associated AV data (and the management information thereof) combined and reproduced with the original AV data shown in Fig. 14. The processes in this description are performed by the content provider that provides the AV content.

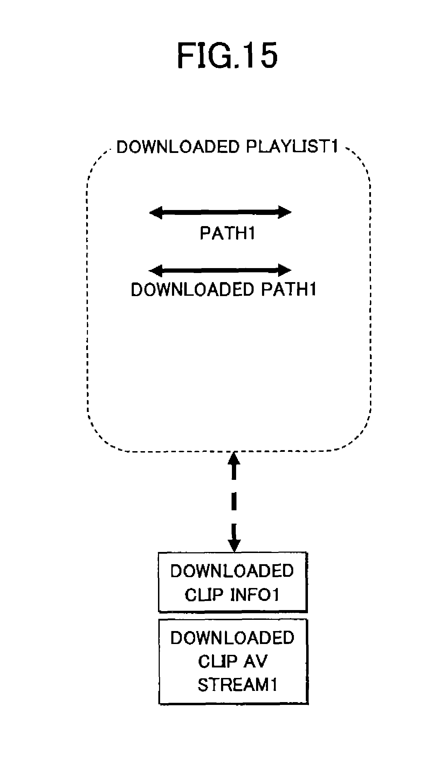

Fig. 15 is a diagram for describing an example of the correlation of downloaded associatedAV data with the management information of the associated AV data downloaded along with the associated AV data.
As shown in Fig. 15, if the content provider provides the associated AV data, which are Downloaded Clip AV Stream1 and Downloaded Clip Info1, for the first time, Downloaded Playlist1 (management information 1) is created. The Downloaded Playlist1 is the Playlist1 (corresponding to the original AV data) shown in Fig. 14 with Downloaded Path1 added as Subpath. The Downloaded Path1 is constituted by one or more Playitems referring to the Downloaded Clip Info1.

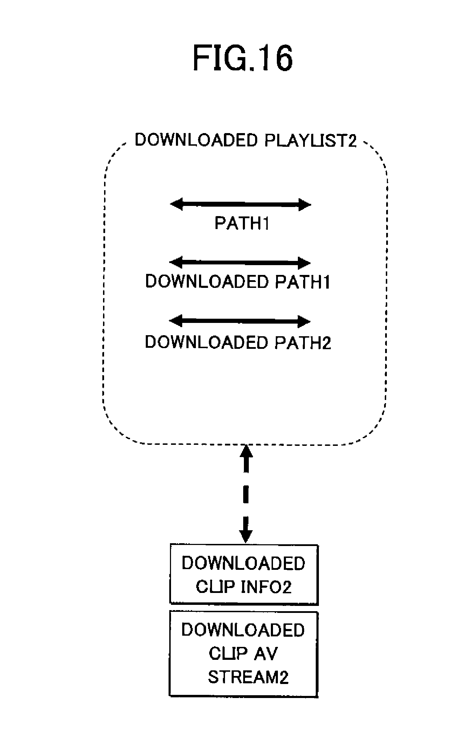

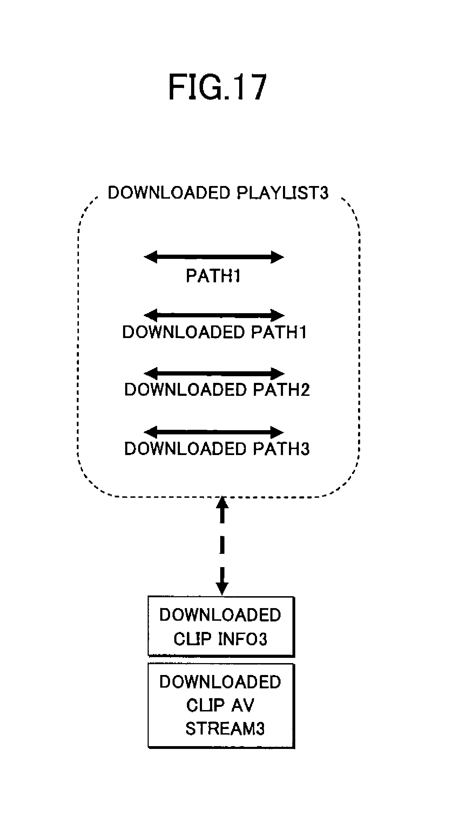

Figs. 16 and 17 are diagrams for describing another example of correlation of downloaded associated AV data with management information of the associated AV data downloaded along with the associated AV data.
As shown in Fig. 16, if the content provider provides the next AV data, which are Downloaded Clip AV Stream2 and Downloaded Clip Info2, Downloaded Playlist2 (management information 2) is created. The Downloaded Playlist2 is the Downloaded Playlist1 shown in Fig. 15 with Downloaded Path2 added as Subpath. The Downloaded Path2 is constituted by one or more Playitems referring to the Downloaded Clip Info2.

As shown in Fig. 17, if Downloaded Clip AV Stream3 and Downloaded Clip Info3 are provided, Downloaded Playlist3 (management information 3) is created. The Downloaded Playlist3 is the Downloaded Playlist2 shown in Fig. 16 with Downloaded Path3 added as Subpath. The Downloaded Path3 is constituted by one or more Playitems referring to the Downloaded Clip Info3.

In this way, the management information (Playlist) of the downloaded associated AV data is created by adding Path to the latest management information, i.e., management information with the largest number of paths, at the time of the start of the provision of the downloaded associated AV data.

In the provision of the associated AV data of the original AV data (e.g., a U.S. movie, etc.), for example, the Downloaded Clip AV Stream1 can be Japanese subtitles; the Downloaded Clip AV Stream2 can be Dutch subtitles; and the Downloaded Clip AV Stream3 can be French subtitles. The associated AV data are not limited to subtitle data and various regenerable data such as after-recorded audio can be applied, for example.

### <Method of Downloading Associated Data and Management Information Thereof>

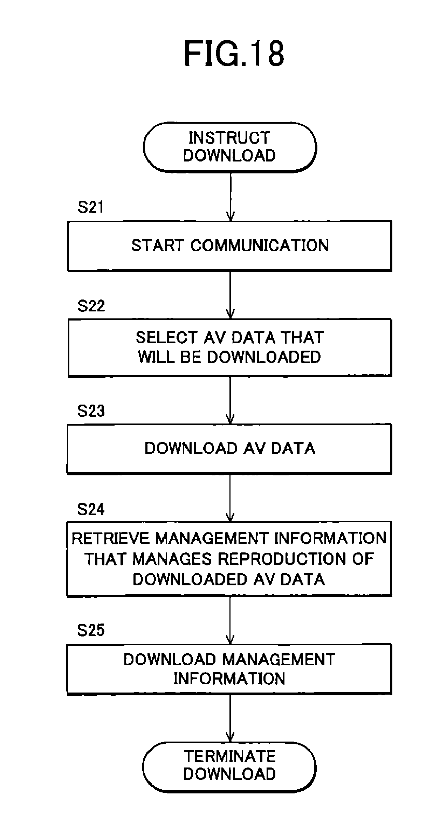

Description will be made of a method of downloading the associated AV data described above and the management information of the associated AV data with reference to Fig. 18.
Fig. 18 is a flowchart for describing an example of a method of downloading the associated AV data and the management information thereof. A user instructs from the recording and reproducing apparatus 200 to download the associated AV data associated with the original AV data recorded on the ROM disk 206 from the server. The recording and reproducing apparatus 200 starts communication with the server (step S21) . The server stores a list of the associated AV data that can be downloaded and based on this list, a user selects the associated AV data that will be downloaded (step S22). The recording and reproducing apparatus 200 downloads the selected associated AV data into the recording area 210 (step S23) . The management information corresponding to the downloaded associated AV data is searched (step S24) and the management information is downloaded into the recording area 210 (step S25).

That is, If the Downloaded Clip AV Stream1 shown in Fig. 15 described above is downloaded, the corresponding management information 1 (Downloaded Playlist1) is also downloaded. Similarly, If the Downloaded Clip AV Stream3 shown in Fig. 17 is downloaded, the corresponding management information 3 (Downloaded Playlist3) is also downloaded.

The associated AV data may not be downloaded in the provided order and may be downloaded as needed.
If the downloaded management information is old information as compared to the management information recorded in the recording area 210 within the recording and reproducing apparatus 200, that is, if the downloaded management information has less number of the Paths, the downloaded management information does not have to be recoded in the recording area 210 within the recording and reproducing apparatus 200. Before downloading the management information, it may be determined whether or not the management information is newer than management information already recorded in the recording area 210 and it may be decided based on the determination result whether or not the management information will be downloaded from the server.
With regard to the management information provided by the server, the server may provide only the latest management information that the server can provide, i.e., the management information with the largest number of the Paths that the server can provide.

### <Method of Reproducing AV Data>

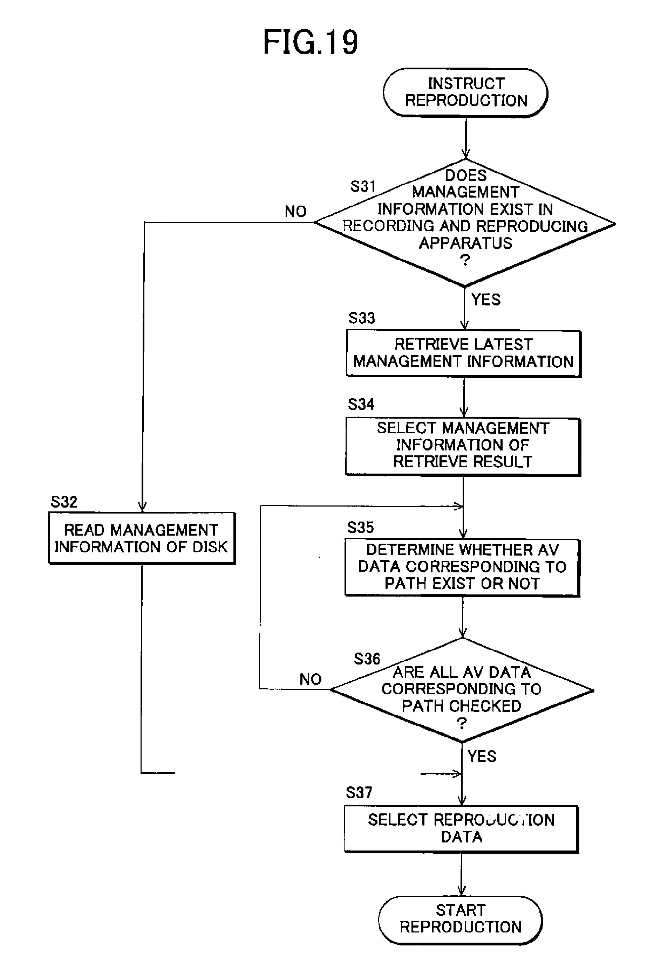

Description will be made of a method of combining and reproducing the associated AV data downloaded in the recording and reproducing apparatus 200 and the original AV data recorded on the ROM disk 206 with the use of the management information downloaded in accordance with the above downloading method of the associated AV data and the management information thereof with reference to Fig. 19.
Fig. 19 is a flowchart for describing an example of a method of reproducing the AV data. First, a user instructs from the recording and reproducing apparatus 200 to reproduce the original AV data recorded in the ROM disk 206. The recording and reproducing apparatus 200 determines whether or not the management information associated with the original AV data recorded on the ROM disk 206 is recorded in the recording area 210 within the recording and reproducing apparatus 200 (step S31). To determine whether or not information is the management information associated with the original AV data recorded on the ROM disk 206, for example, it is conceivable to record in the downloaded management information the title of the original AV data recorded on the ROM disk 206.

At step S31, if the management information associated with the original AV data recorded on the ROM disk is not recorded in the recording area 210 within the recording and reproducing apparatus 200 (in the case of NO), the recording and reproducing apparatus 200 reads relevant management information from the ROM disk 206 (step S32), goes to step S37 to select the reproduction target AV data from the multiplexed (original) AV data managed by the Mainpath of the management information recorded on the ROM disk 206 and the associated AV data managed by the Subpath (step S37), and reproduces the selected AV data in a combined manner. This process is the same as the case of reproducing only the AV data recorded on the ROM disk 206.

At step S31, if the management information associated with the original AV data recorded on the ROM disk 206 is recorded in the recording area 210 within the recording and reproducing apparatus 200 (in the case of YES), the recording and reproducing apparatus 200 retrieves the latest management information, i.e., the management information with the largest number of the Paths out of the management information recorded in the recording area 210 within the recording and reproducing apparatus 200 and the management information recorded on the ROM disk 206 (step S33) and interprets the retrieved management information (step S34). The Mainpath of the management information is constituted by the Playitem referring to the original AV data recorded on the ROM disk 206.

The recording and reproducing apparatus 200 determines whether or not the associated AV data referred by the Playitem constituting each Downloaded Path of the management information, i.e., the Downloaded Clip Info and the Downloaded Clip AV Stream exist in the ROM disk 206 or the recording area 210 within the recording and reproducing apparatus 200 (step S35). In the method of determining whether or not the associated AV data are recorded in the ROM disk 206 or the recording area 210 within the recording and reproducing apparatus 2 00, it can be determined whether a file with a file name specified using the file system exists or not, or in the case of the downloaded associated AV data, the determination can be made by a method such as providing information in the management information thereof to indicate that the associated AV data has been downloaded.

The recording and reproducing apparatus 200 checks for all the Downloaded Paths whether or not the associated AV data exist which are referred by the Playitem constituting the Downloaded Path of the management information (step S36) and if it is not checked for all the Downloaded Paths (in the case of NO), the procedure goes back to S35. At step S36, if it is checked for all the Downloaded Paths (in the case of YES), based on the check result, the associated AV data are listed and presented to the user when the associated AV data exist which are referred by the Playitem constituting the Downloaded Path of the management information, or the associated AV data are not displayed in a list when the associated AV data do not exist.

However, although the associated AV data are not displayed in a list if the associated AV data do not exist which are referred by the Playitem constituting the Downloaded Path of the management information in the embodiment, the associated AV data may be displayed in a list, and in this case, information is displayedwhich allows user to identify whether the associated AV data can be reproduced or not.

The recording and reproducing apparatus 200 selects the associated AV data desired to be combined and reproduce concurrently with the multiplexed (original) AV data managed by the Mainpath from the associated AV data displayed in a list (step S37) and combines and reproduces the selected associated AV data with the original AV data.

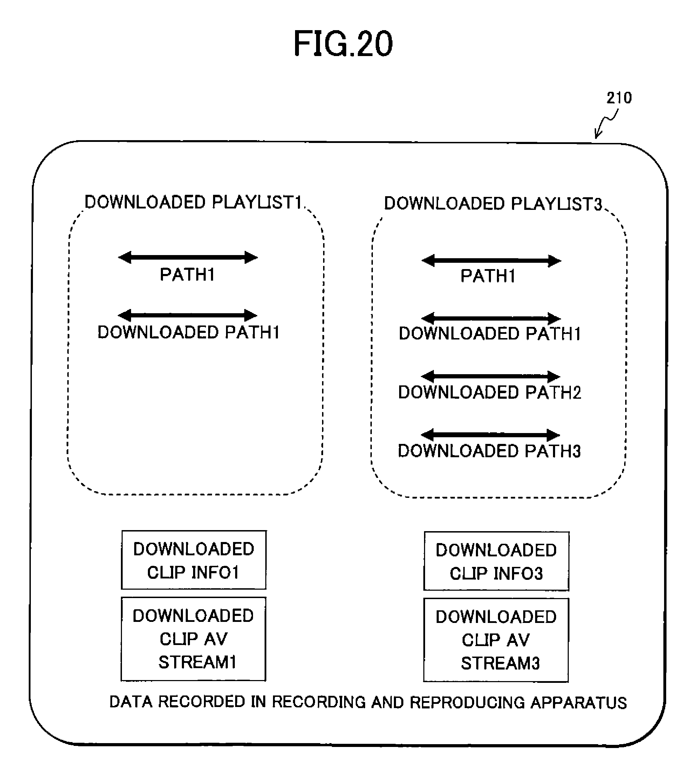

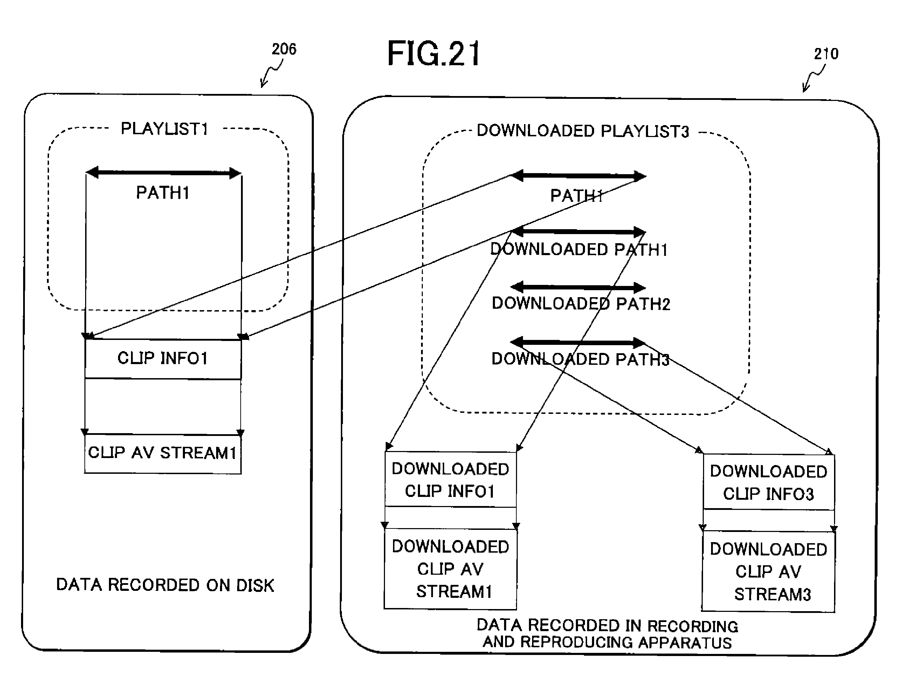

Specific description will be made of the reproduction process of the associated AV data when downloading the Downloaded Clip AV Stream1 and Downloaded Clip AV Stream3 shown in Fig. 17 described above with reference to Figs. 20 and 21.
Fig. 20 is a diagram showing a configuration example of the management information and the associated AV data recorded in the recording area 210 within the recording and reproducing apparatus 200. Fig. 21 is a diagram for describing an example of correlation of the associated information and the original AV data recorded on the ROM disk 206 with the management information and the associated AV data recorded in the recording area 210 within the recording and reproducing apparatus 200.

As shown in Fig. 20, the recording area 210 within the recording and reproducing apparatus 200 records the Downloaded Clip AV Stream1, the Downloaded Clip AV Strea3, the Downloaded Clip Info1, the Downloaded Clip Info3, the Downloaded Playlist1, and the Downloaded Playlist3. In this case, the Downloaded Playlist 3 with the largest number of the Paths is retrieved when the latest management information is searched.

It is determined whether the AV data referred by the Playitem constituting the Downloaded Path1, i.e., the Downloaded Clip AV Stream1 and the Downloaded Clip Info1 exist or not, whether the AV data referred by the Playitem constituting the Downloaded Path2, i.e., the Downloaded Clip AV Stream2 and the Downloaded Clip Info2 exist or not, and whether the AV data referred by the Playitem constituting the Downloaded Path3, i.e., the Downloaded Clip AV Stream3 and the Downloaded Clip Info3 exist or not.

In this case, the Downloaded Clip AV Stream1, the Downloaded Clip Info1, the Downloaded Clip AV Stream3, and the Downloaded Clip Info3 exist and are displayed in a list, and as shown in Fig. 21, the Clip AV Stream1, the Downloaded Clip AV Stream1, and the Downloaded Clip AV Stream3 are managed by the Downloaded Playlist 3. In this example, the Downloaded Clip AV Stream2 is not displayed in a list.

Based on this list, the user selects the Downloaded Clip AV Stream1 or the Downloaded Clip AV Stream3. The selected Downloaded Clip AV Stream1 or Downloaded Clip AV Stream3 is combined and reproduced with the Clip AV Stream1.

For example, when it is assumed that: the original AV data (Clip AV Stream1) recorded on the ROM disk 206 is a U.S. movie; the Downloaded Clip AV Stream1 is Japanese subtitles; the Downloaded Clip AV Stream2 is English subtitles; and the Downloaded Clip AV Stream3 is Dutch subtitles, the Downloaded Clip AV Stream1 or the Downloaded Clip AV Stream3 can be selected at the time of the reproduction of the ROM disk 206. Since the Japanese subtitles or Dutch subtitles can be selected at the time of the reproduction of the U.S. movie, the U.S. movie recorded on the ROM disk 206 can be combined and reproduced concurrently with the downloaded Japanese subtitles or Dutch subtitles.

### <Method of Deleting AV Data>

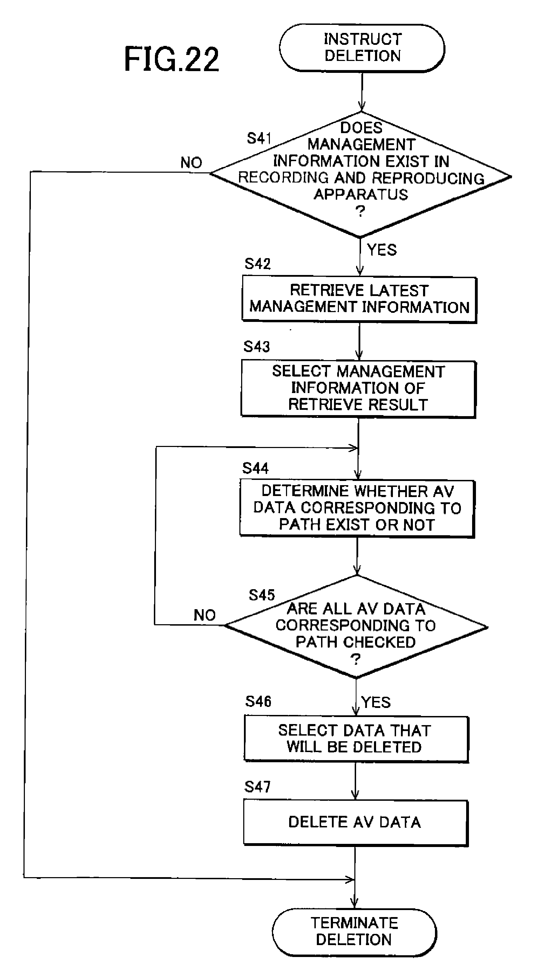

Description will be made of a method of deleting the associated AV data recorded in the recording and reproducing apparatus 200, which are associated with the original AV data recorded on the ROM disk 206 inserted in the recording and reproducing apparatus 200, with the management information downloaded in accordance with the above downloading method, with reference to Fig. 22.
Fig. 22 is a flowchart for describing a method of deleting the associated AV data recorded in the recording area 210 within the recording and reproducing apparatus 200. First, a user instructs from the recording and reproducing apparatus 200 to delete the associated AV data of the original AV data recorded in the ROM disk 206. The recording and reproducing apparatus 200 determines whether or not the management information of the AV data associated with the inserted ROM disk 206 has been downloaded and recorded in the recording area 210 within the recording and reproducing apparatus 200 (step S41). To determine whether or not information is the management information of the AV data associated with the ROM disk 206, for example, it is conceivable to record in the downloaded management information the title of the original AV data recorded on the ROM disk 206.

At step S41, if the management information associated with the original AV data recorded on the ROM disk 206 has not been downloaded and recorded in the recording area 210 within the recording and reproducing apparatus 200 (in the case of NO), recording and reproducing apparatus 200 terminates the deleting process of the AV data.

At step S41, if the management information associated with the original AV data recorded on the ROM disk 206 has been downloaded and recorded in the recording area 210 within the recording and reproducing apparatus 200 (in the case of YES), the recording and reproducing apparatus 200 retrieves the latest management information, i.e., the management information with the largest number of the Paths out of the management information recorded in the recording area 210 within the recording and reproducing apparatus 200 (step S42) and interprets the retrieved management information (step S43).

It is determined whether or not the associated AV data referred by the Playitem constituting each Downloaded Path of the management information, i.e., the Downloaded Clip Info and the Downloaded Clip AV Stream exist in the recording area 210 within the recording and reproducing apparatus 200 (step S44) . In the method of determining whether or not the associated AV data are recorded in the recording area 210 within the recording and reproducing apparatus 200, it can be determined whether a file with a file name specified using the file system exists or not, or in the case of the downloaded associated AV data, the determination can be made by a method such as providing information in the management information thereof to indicate that the associated AV data has been downloaded.

The recording and reproducing apparatus 200 checks for all the Downloaded Paths whether or not the associated AV data exist which are referred by the Playitem constituting the Downloaded Path of the management information (step S45) and if it is not checked for all the Downloaded Paths (in the case of NO), the procedure goes back to S44. At step S45, if it is checked for all the Downloaded Paths (in the case of YES), based on the check result, the associated AV data are listed and presented to the user when the associated AV data exist which are referred by the Playitem constituting the Downloaded Path of the management information, or the associated AV data are not displayed in a list when the associated AV data do not exist.

However, although the associated AV data are not displayed in a list when the associated AV data do not exist which are referred by the Playitem constituting the Downloaded Path of the management information in the embodiment, the associated AV data may be displayed in a list, and in this case, information is displayed which allows user to identify whether the associated AV data can be deleted or not.

The user selects the associated AV data deleted from the associated AV data displayed in a list (step S46). The recording and reproducing apparatus 200 deletes the associated AV data selected by the user, i.e., the Downloaded Clip info and the Downloaded Clip AV Stream (step S47).

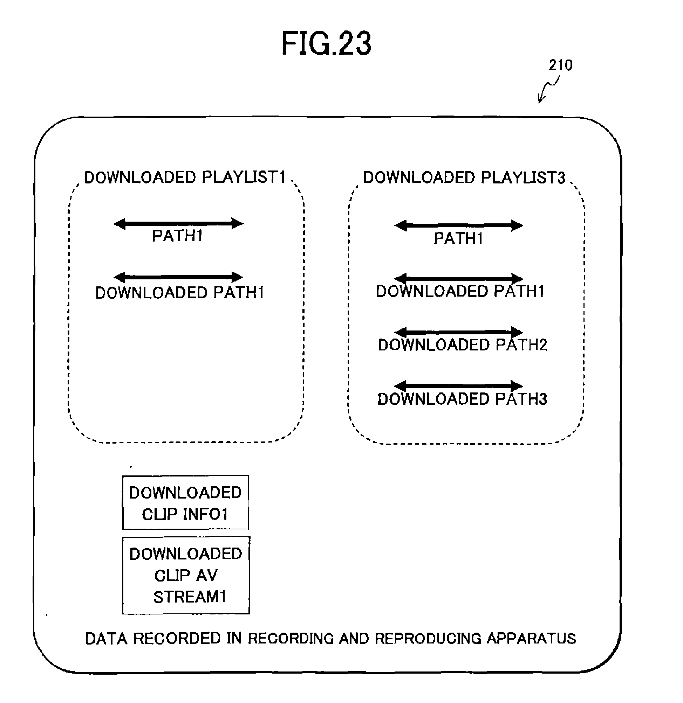

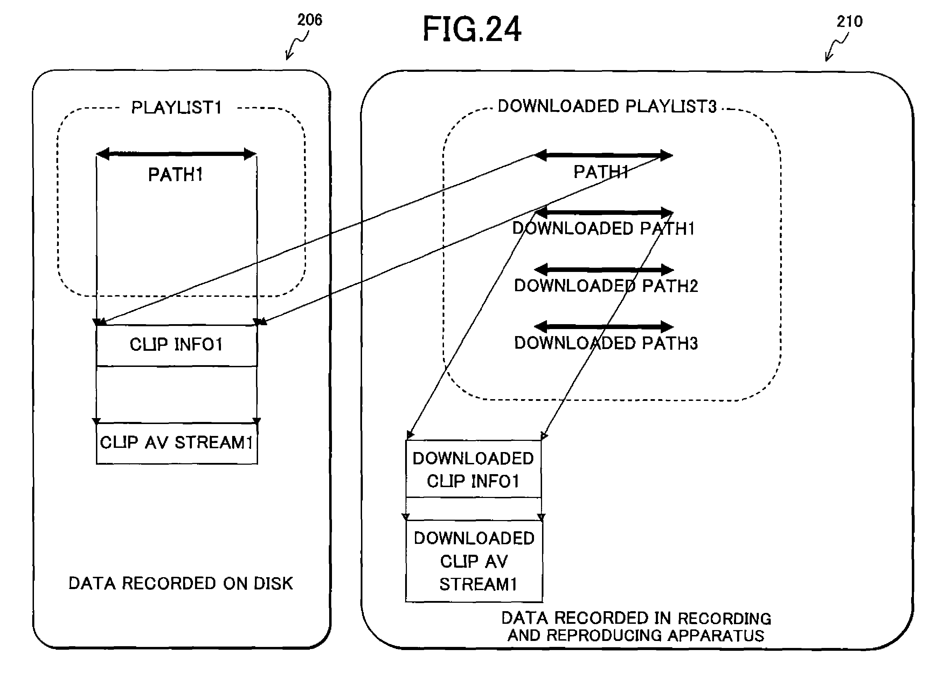

Description will be made of an example of deleting the Downloaded Clip info3 and the Downloaded Clip AV Stream3 from the recording area 210 shown in Fig. 20 described above with reference to Figs. 23 and 24.
Fig. 23 is a diagram showing an example of the management information and the associated AV data recorded in the recording area 210 after the Downloaded Clip Info3 and the Downloaded Clip AV Stream3 are deleted from the recording area 210 shown in Fig. 20.
Fig. 24 is a diagram showing an example of correlation of the associated information and the original AV data recorded on the ROM disk 206 with the management information and the associated AV data recorded in the recording area 210 within the recording and reproducing apparatus 200 after the Downloaded Clip Info3 and the Downloaded Clip AV Stream3 are deleted from the recording area 210 shown in Fig. 20.

As shown in Fig. 20, the recording area 210 within the recording and reproducing apparatus 200 records the Downloaded Clip AV Stream1, the Downloaded Clip AV Stream3, the Downloaded Clip Info1, the DownloadedClip Info3, the Downloaded Playlist1, and the Downloaded Playlist3. In this case, the Downloaded Playlist3 is retrieved when the latest management information is searched.

It is determined whether the associated AV data referred by the Playitem constituting the Downloaded Path1, i.e., the Downloaded Clip AV Stream1 and the Downloaded Clip Info1 exist or not, whether the associated AV data referred by the Playitem constituting the Downloaded Path2, i.e., the Downloaded Clip AV Stream2 and the Downloaded Clip Info2 exist or not, and whether the associated AV data referred by the Playitem constituting the Downloaded Path3, i.e., the Downloaded Clip AV Stream3 and the Downloaded Clip Info3 exist or not.

In this case, the Downloaded Clip AV Stream1, the Downloaded Clip Info1, the Downloaded Clip AV Stream3, and the Downloaded Clip Info3 exist and are displayed in a list. In this example, the Downloaded Clip AV Stream2 is not displayed in a list.

When the user selects the Downloaded Clip AV Stream3 from the list, the Downloaded Clip AV Stream3 and the Downloaded Clip info3 are deleted. However, the management information (in this example, Downloaded Playlist3) is not deleted. As shown in Fig. 23, the Downloaded Clip AV Stream1, the Downloaded Clip Info1, the Downloaded Playlist1, and the Downloaded Playlist3 are recorded in the recording and reproducing apparatus 200. As shown in Fig. 24, the remaining ClipAV Stream1 and Downloaded Clip AV Stream1 not deleted are reproduced and managed by the Downloaded Playl st3.

For example, when it is assumed that: the original AV data (Clip AV Stream1) recorded on the ROM disk 206 is a U.S. movie; the Downloaded Clip AV Stream1 is Japanese subtitles; the Downloaded Clip AV Stream2 is English subtitles; and the Downloaded Clip AV Stream3 is Dutch subtitles, the Downloaded Clip AV Stream1 or the Downloaded Clip AV Stream3, i.e., the Japanese subtitles or the Dutch subtitles can be selected. This example shows the state when the Downloaded Clip AV Stream3 is deleted, i.e., when the Dutch subtitles are deleted.

Although the description has been made of the case when the ROM disk 206 is inserted in the recording and reproducing apparatus 200 in the example of the method of deleting the AV data, this is not a limitation. If the ROM disk 206 is not inserted in the recording and reproducing apparatus 200, the AV data can be deleted. In other words, by using only the management information recorded in the recording area 210 of the recording and reproducing apparatus 200, the associated AV data recorded in the recording area 210 of the recording and reproducing apparatus 200, i.e., the Downloaded Clip Info and the Downloaded Clip AV Stream can be deleted.

Although the description of the above embodiments has been shown the case that the management information has four Paths, the number of the Paths is not limited to four.
In the description of the embodiments, description has been made of the case that the original AV data recorded on the ROM disk 206 is reproduced concurrently with the associated AV data recorded in the recording area 210 within the recording and reproducing apparatus 200. However, the present invention is not limited to this case and the recording areas are not limited with regard to the original AV data and the downloaded associated AV data. In other words, the recording areas may be the external recording medium (ROM disk 206), the recording area 210 within the recording reproduction apparatus 200, or the recording area 210 (of such as the server) on network and these recording areas may be the same area.

Although the associated AV data recorded in the recording area 210 within the recording and reproducing apparatus 200 has been the downloaded AV data, the input source is not limited. For example, the associated AV data may be obtained and recorded from the external recording medium.
Although the description has been made on the assumption that the recording and reproducing apparatus 200 has the recording area for recording the AV data, the recording and reproducing apparatus 200 may not have the recording area, and an input device interface for reading/writing from/to a removable recording medium may be provided to record the AV data in the recording medium.

### EXPLANATION OF REFERENCE NUMERALS

10, 200 ... recording and reproducing apparatus, 11, 201 ··· processing unit, 11a ··· application executing unit, 11b ··· installation processing unit, 11c ··· load processing unit, 11d ··· memory, 12, 202 ··· external device interface, 13, 203 ··· device interface, 14, 204 ··· networkinterface, 15, 205 ··· userinterface, 16, 206 ··· external recording medium, 17, 207 ··· network, 18, 208 ··· display, 19, 209 ··· controller, 20, 210 ··· recorder (recording medium, recording area), 20a, 20b ··· recording medium, 1001 ··· disk-shape recording medium.

## Claims

1. A recording and reproducing apparatus comprising an external interface for connecting with an external recording medium or a server where contents are recorded; a recording means that records the content read from the external recording medium or the server connected to the external interface; and a processing means that reproduces or executes the recorded content, wherein
the processing means includes an installation processing means that installs the content recorded in the external recording medium or the server into a certain area of the recording means with a certain management information,
the processing means instructs the installation processing means to install based on an installation instruction from the content reproduced or executed by the processing means, and
the processing means enables installation processing for only the content with high reliability to be executed when installing the content recorded in the external recording medium or the server into a certain area of the recording means with the certain management information.

2. A computer readable recording medium for recording a program for causing a computer to execute a function as the recording and reproducing apparatus of claim 1.
